# EUROPEAN PATENT SPECIFICATION

(11) **EP 3 049 736 B1**
(45) Date of publication and mention of the grant of the patent: **19.08.2020**
(21) Application number: 14845860.7
(22) Date of filing: 21.05.2014
(51) Int. Cl.: F25B 9/00, F25B 9/12, F25B 19/02

(54) **SYSTEMS AND METHODS FOR CRYOGENIC REFRIGERATION**
SYSTEME UND VERFAHREN ZUR TIEFTEMPERATURKÜHLUNG
SYSTÈMES ET PROCÉDÉS POUR RÉFRIGÉRATION CRYOGÉNIQUE

(30) Priority: 23.09.2013 US 201361881313 P
(43) Date of publication of application: 03.08.2016
(73) Proprietor: D-Wave Systems Inc., Burnaby, BC V5G 4M9 (CA)
(72) Inventor: CITVER, Gregory, Burnaby British Columbia V5G 4M9 (CA); PETROFF, Jacob, Craig, Burnaby British Columbia V5G 4M9 (CA); GUNN, Sasha, Vikram, Burnaby British Columbia V5G 4M9 (CA); KAN, Edmond, Ho, Yin, Burnaby British Columbia V5G 4M9 (CA)
(74) Representative: Schicker, Silvia
(86) International application number: PCT/US2014/039002
(87) International publication number: WO 2015/041726

(56) References cited:
- FR-A1- 2 914 050
- US-A- 3 552 485
- US-A- 3 712 074
- US-A- 4 366 676
- US-A- 4 907 413
- US-A- 5 611 208
- US-A- 5 611 208
- US-A1- 2010 281 885
- US-A1- 2010 281 885
- US-B2- 7 162 877

## Description

### BACKGROUND

### Field

The present systems and methods generally relate to cryogenic refrigeration technology.

### Refrigeration

Temperature is a property that can have a great impact on the state and evolution of a physical system. For instance, environments of extreme heat can cause even the strongest and most solid materials to melt away or disperse as gas. Likewise, a system that is cooled to cryogenic temperatures may enter into a regime where physical properties and behavior differ substantially from what is observed at room temperature. In many technologies, it can be advantageous to operate in this cryogenic regime and harness the physical behaviors that are realized in the realm of cold. The various embodiments of the systems, methods and apparatus described herein may be used to provide and maintain the cryogenic environments necessary to take advantage of the physics at cold temperatures.

Throughout this specification and the appended claims, the term "cryogenic" is used to refer to the temperature range of 0 to about 93K. A variety of technologies may be implemented to produce an environment with cryogenic temperature, though a commonly used device that is known in the art is the helium-3 (³He) - helium-4 (⁴He) dilution refrigerator, known as a dilution refrigerator. Dilution refrigerators can even be used to achieve extreme cryogenic temperatures below 50mK. In the operation of a typical ³He/⁴He dilution refrigerator, the dilution components require a background temperature of about 4K. In order to provide this background cooling, the dilution components may be, e.g., immersed in an evaporating bath of liquid ⁴He or, e.g., coupled to another type of refrigeration or cooling device, such as a pulse-tube cryocooler.

The primary dilution refrigerator components may comprise a series of heat exchangers and chambers that allow the temperature to be lowered to a point where a mixture of ³He and ⁴He separates into two distinct phases. The first phase is mostly ³He, the concentrated phase, and the second phase, the dilute phase, is mostly ⁴He with some ³He. The dilution refrigerator is generally configured to allow some of the ³He to move from the concentrated phase into the dilute phase in an endothermic process, providing cooling and allowing a temperature of around 10mK to be achieved. The ³He is drawn out of the dilute phase through a counter-flow heat exchanger, condensed, cooled, and then returned to the concentrated phase portion of the mixture via the counter-flow heat exchanger. Although the dilute phase is ⁴He rich, the ³He is preferentially drawn from the dilute phase because ³He has a higher partial pressure than ⁴He. The process as described defines a helium circuit. Further details on this dilution effect and the operation of typical dilution refrigerators may be found in F. Pobell, Matter and Methods at Low Temperatures, Springer-Verlag, Second Edition, 1996, pp. 120-156.

In most dilution refrigerator designs, mechanical pumps, compressors, and an external gas-handling system, are used to circulate ³He to warm the ³He from the lowest temperature in the refrigerator to above cryogenic temperatures before returning the ³He to a low cryogenic temperature. The pumps and compressors used conventionally are large, expensive, noisy, in need of periodic maintenance, and inevitably add contaminants, such as air (i.e., nitrogen, oxygen, carbon dioxide, argon, etc.) to the helium.

These contaminants typically have higher freezing points than the helium and so tend to solidify in the helium fluid channels, creating blockages. Such blockages may plug fine capillaries in the dilution refrigerator, causing problems with reliability. Plugging often requires a complete warm-up of a dilution refrigerator in order to remove the contaminants and restore the refrigerator to normal operations. The procedure of warming and subsequently cooling back down to operating temperatures can take several days.

Filters and cold traps can be used to reduce the frequency of plugging by removing contaminants from the helium, but conventional filters and traps are of limited effectiveness and plugging continues to occur even in refrigerators employing prior art filters and cold traps. Thus, plugging due to contaminants remains a serious technical challenge in cryogenic refrigeration technology affecting refrigerator performance, and there remains a need in the art for improved systems and methods for contaminant filtering and/or trapping in cryogenic refrigeration systems.

### BRIEF SUMMARY

The present invention is defined in the independent claims. Particular embodiments are set out in the respective dependent claims.

A cryogenic trap system may be summarized as including an enclosure having a first end, a second end opposed to the first end, and an interior surface that forms an interior of the enclosure; an inlet for a gas in a helium circuit to enter the interior of the enclosure; an outlet for the gas to exit the interior of the enclosure; and at least one helical cryocondensation surface in the interior of the enclosure wherein the at least one helical cryocondensation surface extends axially from at least proximate the first end of the enclosure at least toward the second end of the enclosure, and is thermally conductively coupled to a cold source.

Respective ones of a plurality of portions of the at least one helical cryocondensation surface may be conductively thermally coupled to a plurality of respective portions of the at least one cold source at a plurality of different temperatures, and the at least one helical cryocondensation surface may exhibit a temperature gradient as the interior of the enclosure is traversed from the first to the second end. At least one cryocondensation surface may extend radially in the interior of the enclosure and may include at least one helical cryocondensation surface on an exterior surface of a helical member that axially extends along a majority of the enclosure. The helical member may be in a form of a helical plate having a pair of opposed exterior surfaces wherein the at least one helical cryocondensation surface may include at least one of the opposed exterior surfaces. The outlet may be located at least proximate the first end of the enclosure, and may further include a transfer tube having an interior passage that provides a return flow path from at least proximate the second end of the enclosure to the first end of the enclosure, and which fluidly couples to the outlet. The transfer tube may be helical. The transfer tube may be thermally conductively coupled to the helical plate along a length of the transfer tube. The transfer tube may be at least closely received by the helical member and the helical member may be at least closely received by enclosure. The helical member may include a helical textile and the at least one cryocondensation surface may include a respective exterior surface of a plurality of strands of the helical textile. The helical textile may be at least one of a woven textile, a nonwoven textile or any combination thereof. The outlet may be located at least proximate the first end of the enclosure, and may further include a transfer tube having an interior passage that provides a return flow path from at least proximate the second end of the enclosure to the first end of the enclosure, and which fluidly couples to the outlet. The transfer tube may be thermally conductively coupled to the helical textile along a length of the transfer tube. The transfer tube may be at least closely received by the helical textile and the helical textile may be at least closely received by the interior of enclosure. The outlet may be located at least proximate the first end of the enclosure, and may further include a transfer tube having an interior passage that provides a return flow path from at least proximate the second end of the enclosure to the first end of the enclosure, and which fluidly couples to the outlet. The transfer tube may be helical. At least one of the cryocondensation surface may include an exterior surface of the transfer tube.

The cryogenic trap system may further include a sealed column at least closely received by the transfer tube wherein the sealed column extends for at least a length of the transfer tube and wherein the transfer tube is at least closely received by the interior of enclosure.

The cryogenic trap system may further include an inner tube having an interior passage wherein a majority of the inner tube is received by the interior of the enclosure, the enclosure is helical, the at least one cryocondensation surface comprises a surface of the inner tube, the interior passage of the inner tube provides a first flow path and a gap between the inner tube and the interior surface of the enclosure provides a second flow path.

A flow along the first flow path may run in an opposite direction from a flow along the second flow path. The surface of the inner tube may be an interior surface of the interior passage of the inner tube and the inlet may be provided by a first end of the inner tube. The surface of the inner tube may be an exterior surface of the inner tube and the inlet may be provided by the first end of the enclosure. The helium circuit may be a component of a dilution refrigerator. The cryocondensation surface may have a thermal conductivity of a material selected from a group consisting of: stainless steel, copper, silver sinter, brass, bronze and aluminum. The cryocondensation surface may be formed of an orthotropic material. The enclosure may be thermally coupled to the cold source and may have a thermal conductivity of a material selected from a group consisting of: stainless steel, copper, silver sinter, brass, bronze and aluminum. The cold source may include a pulse tube cryocooler. The cold source may include a bath of liquid cryogen. US 3 712 074 A discloses a cryogenic trap system according to the preamble of claims 1 and 8, respectively.

### BRIEF DESCRIPTION OF THE SEVERAL VIEWS OF THE DRAWING(S)

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility.

The particular shapes of the elements as drawn are not intended to convey any information regarding the actual shape of the particular elements, and have been solely selected for ease of recognition in the drawings.
Figure 1 is a side elevational view of an exemplary dilution refrigeration system employing a trap design in accordance with the present systems and methods.
Figure 2 is a side elevational view of a cryogenic trap system with multiple, distinct members successively arranged along a major axis and which provide multiple, distinct cryocondensation surfaces, in accordance with the present systems and methods, which cryogenic trap system may form a portion of the dilution refrigeration system of Figure 1.
Figure 3A is a cross-sectional view of a portion of a trap including an enclosure housing a first member in the form of a first plate and at least a second member in the form of a second plate successively arranged along a major axis of the enclosure in a stacked arrangement, and including a transfer tube, the trap for use in a cryogenic trap system such as that illustrated in Figure 2, according to at least one illustrated embodiment.
Figure 3B is a cross-sectional view of portion of the trap of Figure 3A, better illustrating the second member in the form of the second plate.
Figure 4A is a cross-sectional view of a portion of a trap including an enclosure housing a first member in the form of a first plate and at least a second and third member in the form of a second plate and third plate, the second and third plates arranged successively along a major axis of the enclosure from the first plate, and including a transfer tube, the trap for use in a cryogenic trap system such as that illustrated in Figure 2, according to at least one illustrated embodiment.
Figure 4B is a cross-sectional view of the trap of Figure 4A, better illustrating the second and the third members of Figure 4A in the form of second and third plates.
Figure 5 is a generally side elevational view of a cryogenic trap system with an isometric view of a single member providing a continuous cryocondensation surface and of a transfer tube that provides a return flow path, in accordance with the present systems and methods.
Figure 6 is a generally side elevational view of a cryogenic trap system with an isometric view of a single member formed of proximately placed strands providing multiple, continuous cryocondensation surfaces and of a transfer tube that provides a return flow path, in accordance with the present systems and methods.
Figure 7 is a generally side elevational view of a cryogenic trap system with an isometric view of a single member in the form of transfer tube that provides a continuous cryocondensation surface and a return flow path, in accordance with the present systems and methods.
Figure 8 is a cross-sectional view of a tubing arrangement which includes an outer tube and an inner tube received in the outer tube, in accordance with the present systems and methods, the tubing arrangement which may be used in the cryogenic trap system of Figure 9.
Figure 9 is a side elevational view of a cryocondensation trap with the tubing arrangement of Figure 8, showing representative flows through the outer tube and the inner tube, in accordance with the present systems and methods.
Figure 10 is a diagrammatic view of the cryocondensation surface provided by the single, continuous member of Figure 5 laid out flat, to better illustrate and explain the structure and operation thereof.
Figure 11 is a schematic diagram of a cryogenic trap system with multiple cryocondensation traps in accordance with the present systems and methods.

### DETAILED DESCRIPTION

In the following description, some specific details are included to provide a thorough understanding of various disclosed embodiments. One skilled in the relevant art, however, will recognize that embodiments may be practiced without one or more of these specific details, or with other methods, components, materials, etc. In other instances, well-known structures associated with refrigeration systems, such as heat exchangers, impedances, and control systems including microprocessors, heat switches, drive circuitry and nontransitory computer- or processor-readable media such as nonvolatile memory for instance read only memory (ROM), electronically erasable programmable ROM (EEPROM) or FLASH memory, etc., or volatile memory for instance static or dynamic random access memory (ROM) have not been shown or described in detail to avoid unnecessarily obscuring descriptions of the embodiments of the present systems and methods.

Unless the context requires otherwise, throughout the specification and claims which follow, the word "comprise" and variations thereof, such as, "comprises" and "comprising" are to be construed in an open, inclusive sense, that is as "including, but not limited to."

Reference throughout this specification to "one embodiment," or "an embodiment," or "another embodiment" means that a particular referent feature, structure, or characteristic described in connection with the embodiment is included in at least one embodiment. Thus, the appearances of the phrases "in one embodiment," or "in an embodiment," or "another embodiment" in various places throughout this specification are not necessarily all referring to the same embodiment. Furthermore, the particular features, structures, or characteristics may be combined in any suitable manner in one or more embodiments.

It should be noted that, as used in this specification and the appended claims, the singular forms "a," "an," and "the" include plural referents unless the content clearly dictates otherwise. Thus, for example, reference to "a refrigeration system" includes a single refrigeration system, or two or more refrigeration systems.

It should also be noted that the term "or" is generally employed in its sense including "and/or" unless the content clearly dictates otherwise.

The headings provided herein are for convenience only and do not interpret the scope or meaning of the embodiments.

The various embodiments described herein provide systems and methods for improving the performance of cryogenic refrigeration systems. More specifically, the various embodiments described herein provide systems and methods for improved filtering/trapping of contaminants in the helium circuit of a dilution refrigerator.

Most dilution refrigeration systems available today are susceptible to plugging in the helium circuit caused by the freezing out of contaminants that have permeated into the helium itself. For example, a small leak in a pump or portion of tubing in the helium circuit may allow the ingress of air into the helium circuit, and the components of this air may freeze at a temperature at which the helium remains a gas or liquid. The frozen air may adhere to the inner walls of the tubing that forms the helium circuit and plug the circuit. Such plugging will affect, and may completely disrupt, the operation of the dilution refrigerator.

In some applications, it may be desirable for a dilution refrigerator to be capable of continuous operations for on the order of years. For example, in applications of superconducting computing (such as superconducting quantum computation) where the computer processor is cooled by a dilution refrigerator, it may be desirable for the computer processor to remain cold (i.e., operational) for on the order of years. Current dilution refrigeration systems will typically experience a plugging event on shorter timescales (i.e., on the order of days, weeks, or months) and are not well suited to providing continuous long-term operation. Current dilution refrigeration systems rely on filters or "cold traps" to remove contaminants from the helium in the helium circuit.

Most conventional cold traps employ cryoadsorption to extract contaminants from the helium as it flows through the cold trap. In brief, a cryoadsorption cold trap comprises a large enclosure (i.e., the "trap") having an input port and an output port. Tubing of the helium circuit is connected to these ports such that the internal volume of the trap is part of the helium circuit. The trap is cooled to a cryogenic temperature, typically by immersion in a liquid cryogen such as liquid nitrogen. The trap is at least partially filled with a cryoadsorptive material, such as charcoal, activated charcoal, or zeolite.

When the cryoadsorptive material is cooled to a sufficiently cold temperature (by thermal coupling to, e.g., the liquid cryogen bath; "sufficiently cold" depends on the specific material being employed) the cryoadsorptive material will adsorb certain substances from its environment. The cryoadsorptive material may be thought of as a "sponge" to which certain selected materials in its environment will adhere and allowing other materials to pass through.

The temperature of the cryoadsorptive material determines in part whether any given substance will be adsorbed or will pass through the cryoadsorptive material. Helium can typically only be significantly adsorbed at very cold temperatures (i.e., colder than most other substances), thus, a cryoadsorptive material may be cooled to a temperature at which it does not adsorb helium but does adsorb contaminants that may be present in the helium gas. This is the basis for most conventional cold traps.

There are many potential sources of performance degradation in cryoadsorption cold traps. For example, the liquid nitrogen bath employed to cool the trap may continually boil away nitrogen, causing the level of liquid nitrogen surrounding the trap to fall and reductions/variations in the cooling of the cryoadsorptive material, thus requiring regular replenishment of liquid nitrogen. Furthermore, many cryoadsorptive materials (such as charcoal) are very poor thermal conductors and not easily thermalized to the temperature of the liquid nitrogen immersion bath. Thus, even if a trap is immersed in liquid nitrogen, the cryoadsorptive material within the trap may not be sufficiently cooled to provide the desired trapping performance. Furthermore, cryoadsorption cold traps are not designed to accommodate phase changes of contaminants and thus solidification of contaminants on the surface of the cryoadsorptive material can influence the flow of helium through the trap, providing "low resistance channels" through which contaminants may flow without being adsorbed.

Most conventional adsorption traps employ a single mass of adsorptive material contained in a large reservoir volume. This inevitably results in the formation of preferential flow paths through the adsorptive material such that only a fraction of the adsorptive surface is actually encountered by the flowing gas (e.g., helium). Also, since adsorptive materials (e.g., charcoal) often have low thermal conductivities, acting more similarly to insulators, a large mass of adsorptive material typically does not thermalize well throughout.

In accordance with the present systems and methods, the performance of a cold trap may be improved by harnessing the effects of cryocondensation as opposed to cryoadsorption and/or by implementing multiple traps at specific temperatures or a continuous trap with differing temperatures at differing levels or regions of the trap in the helium circuit.

Cryocondensation is a physical phenomenon whereby molecules of gas encounter a very cold surface and solidify upon the surface. Cryocondensation is, in effect, a mechanism by which blockages and plugging by contaminants may occur within the helium circuit of a dilution refrigerator, as described above. In accordance with the present systems and methods, this mechanism may be used to deliberately trap contaminants in multiple regions of the helium circuit such that the contaminants do not form blockages that plug the circuit.

New cryocondensation trap systems and methods described herein may be similar to a cryoadsorption trap in that the new cryoadsorption traps employ a trap enclosure connected in series with the helium circuit via an input port and an output port. However, the presently described cryocondensation traps need not employ a cryoadsorptive material to adsorb contaminants. Instead, a cryocondensation trap may employ a material having a thermal conductivity higher than that of a cryoadsorptive material, such as a metal (e.g., copper, stainless steel, silver sinter, brass, bronze, aluminum, etc.) or other material (e.g., alumina silicate, clay, glass wool, etc.). The cryocondensation trap may employ cryocondensation. For example, the trapping enclosure may be formed of such a material and the inner walls of the trapping enclosure may serve as cryocondensation surfaces.

Alternatively, the cold trap may comprise at least one member projecting into an interior volume of the trap, wherein at least one exposed surface of the member may serve as a cryocondensation surface. In some implementations, a large total surface area of cryocondensation material may be employed to increase the contact surface area for the helium gas. To this end, the inner surface of the trap enclosure may be rifled, corrugated, textured, finned, pinned, etc., or alternatively, the interior of the trap may include a member adopting a perforated or porous formation, such as that of sintered metal, proximately placed strands, or an interwoven arrangement, etc.

In some implementations, the cryocondensation material may advantageously be selected to have a binding energy that matches the contaminants to be trapped but that does not match helium so as to minimize the trapping of helium. Hence, care should be taken for a cryocondensation trap operating at approximately 5K (i.e. the temperature at which helium may cryocondense and/or cryoadsorb). Similarly, in some embodiments, the material may be selected such that the residency of molecules on the cryocondensation surface(s) is long, e.g., on the order of years.

As described previously, certain contaminants may cryocondense and/or cryoadsorb at a first temperature range and other contaminants may cryocondense and/or cryoadsorb at a second (different) temperature range. For example, water, carbon dioxide, and most hydrocarbons may cryocondense and/or cryoadsorb at around 80K. However, nitrogen, oxygen, and argon may cryocondense and/or cryoadsorb at around 40K. Neon and hydrogen may cryocondense and/or cryoadsorb at or below about 5K. Thus, in accordance with the presently described systems and methods, in some embodiments, a cold trap will be capable of trapping impurities at a range of different temperatures, such as at or below 80K, at or below 40K and at or below 5K. Thus, by the present systems and methods, a single cold trap at a range of temperatures may be able to sufficiently to trap water, carbon dioxide, hydrocarbons, nitrogen, oxygen, argon, etc. in order to reduce plugging and increase operational time of a dilution refrigerator.

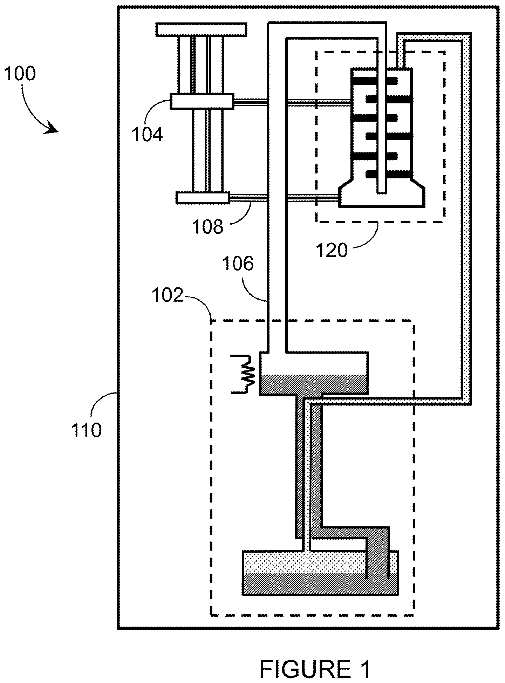

In some implementations, the cold trap is cooled to an operational temperature by thermally coupling a region of the cold trap to a low temperature (e.g. approximately 4K) stage of a cryocooler, such as a pulse tube cryocooler. The cold trap may further include a transfer tube or pipe serving as a cold exchanger. In some implementations, the transfer tube has a thermal conductivity of a material selected from a group consisting of: stainless steel, copper, silver sinter, brass, bronze and aluminum. The transfer tube may help to establish a temperature gradient in the cold trap, allowing different types of contaminants to be trapped in different regions of the same cold trap. Alternatively, the cold trap may be thermally coupled to two or more different temperature stages of a cryocooler such that different regions of the cold trap may have a different temperature, thereby forming a temperature gradient within the cold trap. Figure 1 shows an exemplary dilution refrigeration system 100 employing a trap 120 in accordance with the present systems and methods. A side covering of trap 120 may be included but is not detailed for clarity of illustration.

Dilution refrigeration system 100 includes dilution refrigerator 102, which is background cooled by a pulse tube cryocooler 104. In the illustrated embodiment, the cold head of pulse tube 104 is thermally coupled to a cryocondensation portion of dilution refrigerator 102 (not shown in Figure 1). Dilution refrigeration system 100 also includes helium circuit 106 (comprising fluid channels and tubing for helium flow) which passes through trap 120.

Trap 120 may be formed by a segment of tubing in helium circuit 106. Trap 120 may be formed of material such as stainless steel. As illustrated, trap 120 is thermally coupled to pulse tube 104 via connector 108 (only one identified). Connector 108 may be formed of a thermally conductive material.

Trap 120 may be thermally coupled to pulse tube 104 at a particular temperature that specifically cryocondenses a certain species or set of species of contaminants (e.g., hydrogen and neon). Such a temperature is correlated with pressure, therefore discussions regarding a temperature at which certain contaminants may cryocondense are in relation to an operating pressure of the trap (e.g. approximately 0.5 standard atmosphere) and the partial pressures within the trap.

Gas entering trap 120 may have an approximate temperature of 300K. Gas located in the region where trap 120 is thermally coupled to pulse tube 104 via connector 108 may have an approximate temperature of 4K. Gas located in the region where trap 120 is thermally coupled to the midpoint of pulse tube 104 may have a different, higher temperature. The gradual decrease in temperature along trap 120 due to the thermal coupling of pulse tube 104 to trap 120 may be further reinforced by including a transfer tube within trap 120 coupled in series with the helium circuit. The transfer tube conveys cooled gas from the interior bottom of trap 120 to the exterior of the enclosure.

The gradual decrease of temperature along trap 120 causes cryocondensation of contaminants on the cryocondensation surfaces inside trap 120. Therefore, the surfaces thermally coupled to trap 120 may be thermalized to different temperatures. Increasing the total cryocondensation surface area inside trap 120, for example by increasing the number of surfaces or by replacing multiple surfaces with a continuous surface that for example, spirals about an axis within trap 120, may allow for a larger volume of contaminants to be trapped in trap 120.

In some implementations, a plurality of cryocondensation traps, such as trap 120, may be coupled to provide redundant trapping mechanisms for contaminants. Dilution refrigeration system 100 may also include vacuum can 110 which contains dilution refrigerator 102, pulse tube 104, and trap 120. Since trap 120 is contained within vacuum can 110, trap 120 may be referred to as an "internal cold trap" in system 100.

As previously discussed, an aspect of conventional adsorption traps is that the "sponging" mechanism inevitably results in the adsorptive material becoming saturated such that it can no longer adsorb contaminants. When this happens, the trap ceases to remove further contaminants from the helium and plugging may occur. Therefore, the efficiency of adsorption degrades as the volume of contaminants adsorbed increases. To avoid such plugging, adsorption traps need to be periodically regenerated. Regeneration of an adsorption trap involves heating the adsorptive material until the contaminants are released. Accordingly, adsorption traps typically include a vent port through which contaminants may be released during regeneration. The time required to regenerate an adsorption trap (i.e., the regeneration cycle of the trap) depends on many factors, including the adsorptive material used, the size of the trap, and the type and quantity of contaminants being adsorbed.

In general, regeneration of an adsorptive material is improved as the regeneration temperature is increased. However, complete regeneration of an adsorptive material may not be possible in the case where hydrocarbons are adsorbed. Releasing hydrocarbons may require a regeneration temperature so high that other trap components (or the adsorptive material itself) may become damaged. Therefore, regeneration may be performed at a temperature that is sufficient to release other contaminants (e.g., water) but not the hydrocarbons themselves. An adsorption trap that has become saturated with hydrocarbons may be "regenerated" by replacing the adsorption material rather than by baking the trap.

A further limitation of conventional cold trap designs is that they provide little or no mechanism for clearly monitoring the performance of the trap. Most dilution refrigerator diagnostics are based on the condensing pressure in the refrigerator, which provides indirect information about helium flow and overall refrigerator health. In accordance with the present systems and methods, the performance of cold trap systems may be enhanced by building active gauges into the trap itself, and/or into the helium circuit immediately before and after the trap. Examples of the types of gauges that may be employed include flow meters, pressure gauges, and contaminant sensors such as water sensors, nitrogen sensors, and the like. The operation of the traps may also be automated and/or remotely controlled by providing, e.g., sensors, gauges, valves, electric motors, solenoids, actuators and switches, etc.

According to the present systems and methods, a cold trap system may also comprise multiple cold traps connected in order to enhance the removal of contaminants from the helium circuit in a dilution refrigerator and extend the operating time of the dilution refrigerator.

In some implementations, a region of a trap at a higher temperature than the cooler, thermalized end may be thermally coupled to a cooling device, such as a regenerator of a pulse tube, to take advantage of available cooling power that is otherwise unused.

Furthermore, in accordance with the present systems and methods, the trap may include a continuous condensation surface within the trap to increase the surface area of the trap so that the trapping volume of the contaminants may also be increased. Different regions of the condensation surface may have different temperatures that may allow many different contaminants to be trapped.

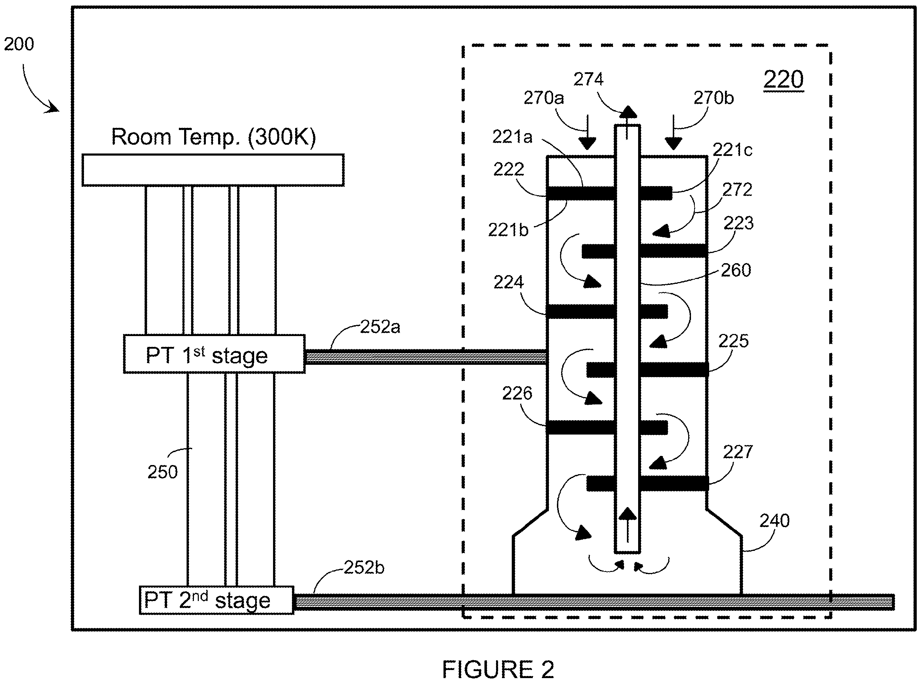

Figure 2 shows a cryogenic trap system 200 in accordance with the present systems and methods. The cryogenic trap system 200 may, for example, be used in the dilution refrigeration system 100 (Figure 1). A side covering of an enclosure 240 is omitted for clarity of illustration. Cryogenic trap system 200 includes a cryocondensation trap 220 having the members 222 - 227. Members 222 - 227 are attached to enclosure 240. Projecting into an interior of trap 220, members 222 - 227 direct the flow of gas through the interior of trap 220. In the illustrated embodiment, the members 222 - 227 are evenly spaced along a primary or longitudinal axis. In other implementations, members 222 - 227 may be unevenly spaced, or may be evenly spaced in some portions and unevenly spaced in others portions. In the illustrated implementation, members 222 - 227 extend horizontally out from enclosure 240. Other implementations may employ a different number, arrangement, and/or orientation or angling of members. Members 222 - 227 may be thermally coupled to a cold source, for instance thermally conductively coupled.

Members 222 - 227 may provide an exposed surface to serve as a cryocondensation surface. For example, member 222 provides three exposed surfaces to serve as cryocondensation surfaces: a major horizontal upper surface 221a, a major horizontal lower surface 221b and one smaller surface 221c approximately perpendicular to surfaces 221a and 221b. Members 223 - 227 are also shown each having three cryocondensation surfaces.

The cryocondensation trap 220 effectively replaces a portion of tubing normally present in dilution refrigeration systems. The tubing normally used in this part of the helium circuit is typically very narrow in diameter, requiring only a relatively small amount of contaminant to form a blockage therein. In trap 220, this narrow tubing is replaced with the enclosure 240, a tube-like enclosure with a large diameter. Trap 220 includes an inlet for gas to enter and an outlet for gas to exit. Enclosure 240 may have a thermal conductivity of a material selected from a group consisting of: stainless steel, copper, silver sinter, brass, bronze and aluminum. Enclosure 240 may be at least partially filled with members 222 - 227.

In some implementations, members 222 - 227 have a thermal conductivity of a material selected from a group consisting of: stainless steel, copper, silver sinter, brass, bronze and aluminum. The cryocondensation surfaces of members 222 - 227 may be formed of an orthotropic material wherein the thermal conductivity thereof along one plane differs from the thermal conductivity thereof along a second plane.

Enclosure 240 of trap 220 may be thermally coupled (e.g., thermally conductively coupled) to a cold source, such as a pulse tube, bath of liquid cryogen, dilution refrigerator plate, etc. As shown in Figure 2, enclosure 240 is thermally coupled to pulse tube 250 via connectors 252a, 252b (collectively 252). Connectors 252 may be comprised of a thermally conductive material. Connector 252a, connector 252b or both may thermally couple trap 220 and pulse tube 250. In the illustrated embodiment, trap 220 is thermally coupled to pulse tube 250 by connector 252a at a first temperature stage and by connector 252b at a second temperature stage. In some implementations, pulse tube 250 comprises a greater or smaller number of temperature stages. In other implementations, trap 220 is thermally conductively coupled to pulse tube 250 at any location and by means different than connectors 252. The sizes and dimensions of the structures shown in Figure 2 are for illustrative purposes only and are not meant to be limiting. The location of any connector 252 on trap 220 may also vary depending on implementation. For example, a different section of trap 220 may be thermally coupled to a different region of pulse tube 250. In other implementations, the difference in the size of pulse tube 250 relative to trap 220 may vary. While connectors 252 are horizontally angled, a horizontal arrangement is not required. Connectors 252 may thermally couple (e.g. thermally conductively couple) pulse tube 250 and trap 220 through any thermally conductive coupling arrangement (e.g. by wire wrap, mesh net, etc.).

In the illustrated embodiment, a region of enclosure 240 thermally coupled to pulse tube 250 may be thermalized to the approximate temperature of a specific temperature stage. For example, the first temperature stage of pulse tube 250 has an approximate temperature of 50K, thus the region where enclosure 240 of trap 220 is thermally coupled to pulse tube 250 may also have a temperature of approximately 50K. Alternatively, enclosure 240 may be thermalized to multiple temperatures by thermal coupling another region of enclosure 240 to a different temperature stage of pulse tube 250. For example, the second temperature stage of pulse tube 250 has an approximate temperature of 4K, thus the region where enclosure 240 of trap 220 is thermally coupled to pulse tube 250 may also have a temperature of approximately 4K.

In Figure 2, the downward pointing arrows 270a and 270b (collectively 270) represent the direction of gas entering the enclosure 240 of the cryocondensation trap 220. Gas entering the enclosure 240 may have an approximate temperature of 300K, or room temperature. As the gas flows through the enclosure 240 as shown by arrow 272 (only one arrow called out for clarity of illustration), the temperature of the gas gradually decreases as a result of a decrease in temperature through the trap 220. By thermalizing a region of enclosure 240 via connector 252a and pulse tube 250, cooling occurs along trap 220. Cooling along trap 220 is also reinforced by transfer tube 260 conveying colder gas out from enclosure 240 as denoted by arrow 274 (only upward pointing arrow 274 called out for clarity of illustration).

The cooling along trap 220 establishes a temperature gradient over the surfaces of members 222 - 227. For example, the temperature gradient of trap 220 may be between approximately 300K and 4K.

Providing trapping surfaces with a temperature gradient may help ensure multiple contaminant materials are trapped. For example, member 222 may be thermalized to approximately 200K, member 223 to approximately 100K, member 224 to approximately 50K, member 225 to approximately 30K, member 226 to approximately 20K and member 227 to approximately 5K and so on. Various contaminants may cryocondense or freeze out at approximately the following temperatures subject to appropriate partial pressures within the trap (e.g. 0.1 Torr):
- 80K: H₂O, CO₂ and most hydrocarbons
- 40K: N₂, oxygen and argon
- 5K: Neon and H₂

Therefore, contaminants such as H₂O, CO₂ and most hydrocarbons may cryocondense and be first trapped on a cryocondensation surface of member 224. Similarly, contaminants such as N₂, oxygen and argon may cryocondense on a surface of member 225, while contaminants such as neon and H₂ may cryocondense on a surface of member 227.

Contaminants with a propensity for cryocondensing at a particular temperature are more likely to cryocondense at a lower temperature. Some implementations, such as trap 220 with a temperature gradient over the surfaces of members 222 - 227, advantageously use this effect. For example, contaminants such as H₂O that escape trapping on a cryocondensation surface of member 224 have a high probability of cryocondensing and thus becoming trapped on a surface of a member having a temperature that is lower than the temperature of member 224. In some embodiments, any one of members 225 - 277 has a temperature lower than that of member 224. Therefore, contaminants may have little or no chance of escaping trap 220.

Members 222 - 227 may take the form of plates. Peripheries of the plates may be bounded along at least one first portion thereof by an inner surface of enclosure 240. The peripheries may be spaced from the inner surface along at least one second portion thereof. For example, where the inner surface of enclosure 240 has a circular profile, the plates may have a complimentary circular profile along the first portion, and a different profile along the second portion, for example, a straight profile. In such a case, the plate may have a generally D-shaped profile.

A plate may provide at least one gap through which gas flowing in enclosure 240 may pass. The size (e.g. total area) of the gap should be considered relative to the surface area of the plate. A smaller gap allows a larger surface area to be available for cryocondensation. Conversely, a smaller gap increases the likelihood that the gap may become blocked due to accumulation of solidified contaminants.

Staggered gaps may encourage directional changes in the flow of gas through a trap such as trap 220, increasing contact between gas molecules and any available cryocondensation surface. In some implementations, the staggered gaps are implemented by alternating a location, position or orientation of a gap of a first plate relative to a gap of at least a second plate which may be, for example, a nearest neighboring plate along a longitudinal axis of enclosure 240.

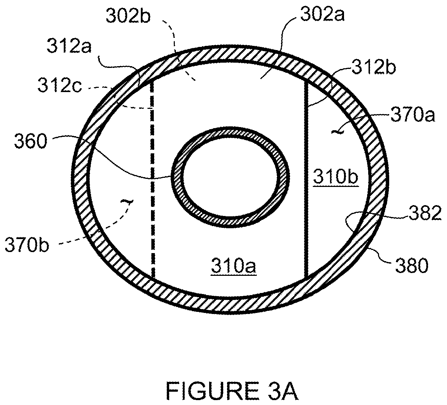

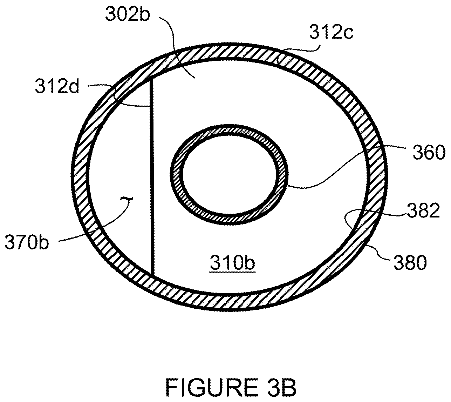

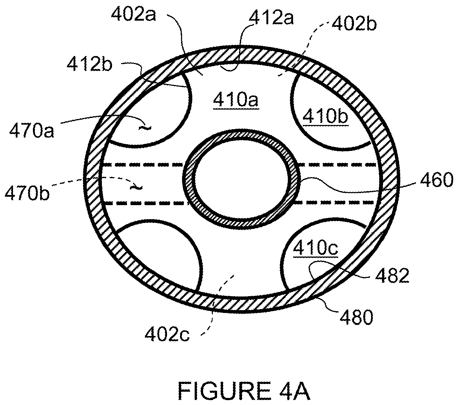

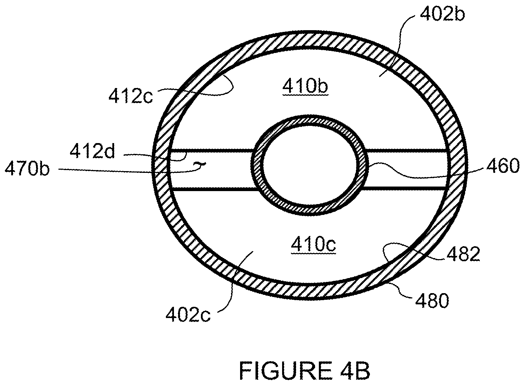

Figures 3A, 3B, 4A and 4B show a number of specific implementations according to the present teachings. These implementations, and illustrations of such, are not intended to be limiting. Other implementations may employ plates of other shapes, or may employ different arrangements of plates in the interior of the trap. Further, the number of plates is not intended to be limiting, and implementations may include a larger or smaller number of plates. A trap, such as trap 220 of Figure 2, may include any number of plates to achieve cryocondensation surfaces suitable to a specific application.

In particular, Figures 3A and 3B show first and second plates 302a, 302b, respectively, of an arrangement of plates (only two shown for clarity of illustration, collectively 302) in an enclosure 380. For clarity of illustration, Figure 3A is a cross-sectional view at a first location along a major axis (e.g., longitudinal axis) of the enclosure 380, in which the first plate 302a is clearly visible, and the second plate 302b is partially occluded by the first plate. Figure 3B is a cross-sectional view at a second location along the major axis of the enclosure 380, in which the second plate 302b is clearly visible, no longer occluded by the first plate 302a.

Figures 3A and 3B show a first major surface 310a, 310b (collectively 310) of the plates 302a, 302b, respectively. The plates 302 may each have second major surface (not visible in Figures 3A, 3B), opposed across a thickness of the plate 302 from the first major surface 310. Plates 302a, 302b may each have a peripheral edge formed of one or more peripheral edge portions 312a, 312b, 312c, 312d (peripheral edges collectively 312).

The plates 302 in any given arrangement of plates may be non-coplanar with respect to one another. In some implementations, the plates 302 are non-parallel with respect to one another. For any given plate 302a, a nearest neighboring plate 302b may immediately precede or immediately follow the given plate 302a, along a major axis (e.g., longitudinal axis) of the enclosure 380. Figures 3A and 3B also show a transfer tube 360. The transfer tube 360 may be similar or identical to the transfer tube 260 found in traps such as trap 220 of Figure 2. In this particular implementation, transfer tube 360 extends along a major axis or centerline of the enclosure 380. Members 222, 223 in trap 220 of Figure 2 illustrate a possible alternative view of plates 302a, 302b respectively as seen from the peripheral edge 312 or from the side of enclosure 240, 380.

As previously noted, a first portion 312a of peripheral edge 312 may have a complementary shape to at least a portion of an inner surface 382 (e.g., inner diameter) of a section of an enclosure 380. For example, first portion 312a of peripheral edge 312 may be convex or arcuate. First portion 312a of peripheral edge 312 may also be sized, dimensioned and configured to be closely received by the corresponding section of the inner surface 382 of the enclosure 380. For instance, where the inner surface 382 of the enclosure 380 has a concave circular profile, first portion 312a may have a complimentary radius of curvature, as illustrated. A second peripheral edge portion 312b may have a straight profile, the plates 302 having a D-shaped profile. In some embodiments, a plate may be closely receive by, or even in an interference fit with, the inner surface 382 of the enclosure 380 of the trap.

Also as previously noted, a plate may provide at least one gap through which gas may flow. Figure 3 shows such gaps 370a, 370b (collectively 370) of plates 302. The peripheries of gaps 370 may be bounded along second peripheral edge portions 312b, 312d and corresponding or neighboring sections of the inner surface 382 of enclosure 380 (collectively 380). (Figure 3A illustrates peripheral edge portion 312d in broken line to denote that peripheral edge portion 312d is hidden or occluded by first plate 302a.) Gaps 370 may provide paths through which gas flow.

Plates 302 may be orientated (e.g., rotated) with respect to one another about a centerline, major axis (e.g., longitudinal axis) of the enclosure 380 in order to stagger gaps 370a, 370b. As previously described, first plate 302a may be located immediately before second plate 302b along a major axis (e.g., longitudinal axis) of the enclosure 380. In the illustrated embodiment, second plate 302b may be rotated approximately 180 degrees about the major axis of the enclosure 380 with respect to the first plate 302a. The plates 302 may additionally or alternatively be skewed with respect to the major axis (e.g., longitudinal axis), such that a perpendicular vector from a major surface 310a, 310b of the plate 302a, 302b is not parallel with the major axis of the enclosure 380. The orientation of plates 302 is such that respective gaps 370 are not aligned. By association, portions of peripheral edges 312b, 312d of respective plates 302 are also not aligned or in registration. In some implementations, plates 302 are orientated such that there is no direct straight line path through the section of the enclosure 380 in which a set or a plurality of plates 302 reside. A non-linear path may force more gas molecules travelling through the trap to contact a cryocondensation surface. Such an arrangement may also reduce the amount of heat transfer (i.e. thermal radiation) from regions of the trap with higher temperatures to regions of low temperatures.

While not illustrated in Figures 3A and 3B, the trap may include additional plates stacked along the major axis of the enclosure 380. The additional plates may be similar or even identical in profile or geometry to the first and second plates 302. Alternatively, the additional plates may have different profiles or geometries from the first and second plates 302. The additional plates would be orientated such that there is no direct straight line path through the section of the enclosure 380 in which a set or a plurality of the additional plates reside.

In particular, Figures 4A and 4B show first, second, and third plates 402a, 402b, 402c, respectively, of an arrangement of plates (only three shown for clarity of illustration, collectively 402). For clarity of illustration, Figure 4A is a cross-sectional view at a first location along a major axis (e.g., longitudinal axis) of the enclosure 480, in which the first plate 402a is clearly visible, and the second plate 402b and third plate 402c are partially occluded by the first plate. Figure 4B is a cross-sectional view at a second location along the major axis of the enclosure 480, in which the second plate 402b and third plate 402c are clearly visible, no longer occluded by the first plate 402a.

In the illustrated embodiment, second and third plates 402b, 402c are co-planar with each other. The first plate 402a may immediately precede the second and third plates 402b, 402c along a major axis (e.g., longitudinal axis) of the enclosure 480. Plates 402 may each have first major surfaces 410a, 410b, 410c, respectively, (only three identified, collectively 410). The plates 402 may each have respective second major surface (not visible in Figures 4A, 4B), opposed across a thickness of the plate 402 from the first major surface 410. The plates 402 may each have a peripheral edge formed by one or more peripheral edge portions 412a, 412b, 412c, 412d (peripheral edges collectively 412). Figures 4A and 4B also show a transfer tube 460. The transfer tube 460 may be similar or identical to the transfer tube 260 found in traps such as trap 220 of Figure 2. In the illustrated embodiment, transfer tube 460 extends along a major axis or centerline of the enclosure 480.

The plates 402 illustrated in Figures 4A and 4B have different plate profiles, geometries and/or different gap profiles compared to the plates 302 illustrated in Figures 3A and 3B. As illustrated in Figure 4A, The first plate 402a may have a first peripheral edge portion 412a with a convex circular profile, complimentary to at least a portion of an inner surface 482 of a section of the enclosure 480, for example a concave inner surface of the enclosure 240 of Figure 2. The first plate 402a may have a second peripheral edge portion 412b, which may have any shape, including concave circular or concave arcuate as illustrated in Figure 4A. Only two peripheral edge portions 412a, 412b are called out in Figure 4A for clarity of illustration, however such portions of the edges may repeat multiple times along the perimeter of first plate 402a, as illustrated.

As best illustrated in Figure 4B, the second plate 402b may have a first peripheral edge portion 412c with a convex circular profile, complimentary to at least a portion of a concave inner surface 482 of a section of the enclosure 480. The second plate 402b may have a second peripheral edge portion 412d which is not complimentary to a portion of a concave inner surface 482. For example, second peripheral edge portion 412d may a straight or flat profile, interrupted by a recess, notch, indentation, or pocket sized dimensioned to receive or accommodate a portion of the transfer tube 460, as best illustrated in Figure 4B. The third plate 402c may be a mirror image of the second plate, thus the third plate 402c may be similarly described in terms of peripheral edges 412. For clarity of illustration, the peripheral edges 412 of the third plate 402c are not called out. In other implementations, the peripheral edges 412 may take on different shapes, lengths and/or orientations than those illustrated or described herein.

A plate may include a plurality of recesses, notches, indentations, pockets, apertures, openings or other structures to form or define one or more gaps between the plate and an inner surface of the enclosure. As illustrated, the peripheral edge 412 of the first plate 402a forms four gaps 470a (only one called out for clarity of illustration) with the inner surface 482 of the enclosure 480. The gaps 470a may be bounded by a first portion 412b of peripheral edge 412 of the first plate 402a and a section of the inner surface 482 of enclosure 480. The remaining three gaps of plate 402a may be similarly described. The second and third plates 402b, 402c may form or define two gaps, such as gap 470b (only one called out for clarity of illustration), one on either side of the transfer tube 460. The gap 470b may be bounded by opposed peripheral edge portions 412d of the second and third plates 402b and 402c, respectively, a section of an outer surface of transfer tube 460, and a section of the inner surface 482 of enclosure 480.

The first plate 402a may be located immediately before the second and third plates 402b, 402c along a major axis (e.g., longitudinal axis) of the enclosure 480. Similar to the structure described with respect to Figures 3A and 3B, the orientation of plates 402 of Figures 4A and 4B in an enclosure is such that there is no straight line path through the section of the enclosure 480 in which a set or a plurality of plates 402 reside.

As previously described, increasing the surface area of the cryocondensation surfaces may result in a large volume of different types of contaminants that are trapped in a single cryocondensation trap such as trap 220 of Figure 2. An increase in surface area may be achieved by for example, increasing the number of cryocondensation surfaces provided by members or by making the surfaces of the members finned, corrugated, etc. As illustrated in Figure 2, a cryocondensation trap 220 may employ multiple, discrete cryocondensation surfaces provided by multiple, discrete members. Alternatively, members 222 - 227 may be replaced with a single continuous member (e.g., helical continuous member) that may spiral/zigzag through enclosure 240 along a major or longitudinal axis of the enclosure. A temperature gradient may be established along the continuous member to trap multiple types of contaminants at differing temperature levels along at least one cryocondensation surface of the member.

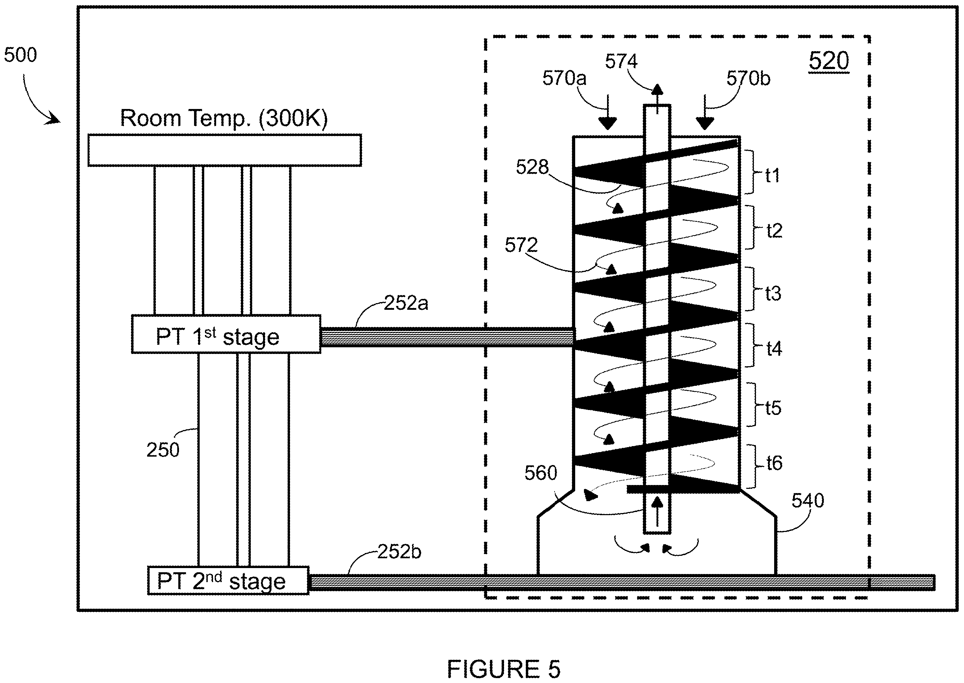

Figure 5 shows a cryogenic trap system 500 with a single member providing a continuous cryocondensation surface in accordance with the present invention. Cryogenic trap system 500 is similar to cryogenic trap system 200 of Figure 2 except that members 222 - 227 of Figure 2 are replaced with a single member 528. Member 528 is thermally coupled to the enclosure 540, namely thermally conductively coupled. Projecting into the interior of trap 520, member 528 directs the flow of gas through the interior of enclosure 540. Enclosure 540 may be at least partially filled with member 528.

Cryogenic trap system 500 includes a cryocondensation trap 520. Trap 520 employs member 528 having a continuous cryocondensation surface, namely a helical or spiraling surface, with multiple turns, windings, or wraps, over a length of an enclosure. For example, a member implemented as a helical or spiraling "tape" may have two major exposed cryocondensation surfaces facing opposing directions (e.g., opposed across a thickness of the member along the length of the member), running along the length of the member. The helical or spiraling member 528 will typically be characterized by an axial length, pitch (i.e., number of turns per unit length), inner radial dimension and outer radial dimension which radial dimensions are measured radially from the longitudinal axis to an inner edge and outer edge of the helical or spiraling member 528, respectively. Dimension may be represented in radial coordinates. Typically, the pitch, inner radial dimension and outer radial dimension will remain constant over the length, although such is not necessary. For example, one or more of these characteristics may vary over the length, for example to match or compliment another portion of surface of the trap (e.g., a tapered interior wall of the enclosure). Member 528 of Figure 5 may be similarly described. However, other implementations may comprise a member having a different shape and/or number of exposed surfaces.

A cryocondensation surface of member 528 is thermally coupled (e.g., thermally conductively coupled) to an inner surface of enclosure 540. Enclosure 540 may have a thermal conductivity of a material selected from a group consisting of: stainless steel, copper, silver sinter, brass, bronze and aluminum. Similarly, member 528 may have a thermal conductivity of a material selected from a group consisting of: stainless steel, copper, silver sinter, brass, bronze and aluminum. Member 528 may be formed of an orthotropic material wherein the thermal conductivity thereof along one plane differs from the thermal conductivity thereof along a second different plane.

As shown in Figure 5, enclosure 540 is thermally coupled (e.g., thermally conductively coupled) to a cold source, such as pulse tube 250, via thermally conductive connectors 252. The results and implications of thermal coupling at least one region of enclosure 540 to at least one temperature stage of pulse tube 250 are analogous to those previously described of thermal coupling at least one region of enclosure 240 to at least one temperature stage of pulse tube 250 of Figure 2. At least one region of enclosure 540 may be thermalized to a specific temperature by thermal coupling said region to a specific temperature provided by a stage of the pulse tube. For example, the general region where enclosure 540 of trap 520 is thermally coupled to a 50K first stage of the pulse tube 250 may have an approximate temperature of 50K, and the general region where enclosure 540 is thermally coupled to a 4K second stage of the pulse tube 250 may have an approximate temperature of 4K.

Gas comprising contaminants may flow into enclosure 540 of trap 520 at approximately 300K, or room temperature. Downward pointing arrows 570a, 570b (collectively 570) represent the direction of gas entering trap 520. A continuous, helical or spiral-like cryocondensation surface such as that provided by member 528 may afford a spiral-like path, denoted by the spiral-like arrow 572 (only one spiral-like arrow called out for clarity of illustration), along which gas passing through trap 520 may flow. As gas flows through enclosure 540, the temperature of the gas may gradually decrease. Trap 520 of Figure 5 may be similar to trap 220 of Figure 2 in that an equivalent temperature gradient exists along trap 520. The mechanism by which this cooling effect occurs along trap 520 is analogous to that of trap 220 of Figure 2, as described previously. The contribution of the transfer tube 560 of Figure 5 in further enforcing a temperature gradient between approximately 300K and 4K along enclosure 540 is also analogous to that of transfer tube 260 of Figure 2. Transfer tube 560 may convey filtered gas from an end of trap 520 having an approximate temperature of 4K through trap 520 via arrow 572. Finally, the gas may exit enclosure 540 via transfer tube 560 in the direction denoted by arrow 574 (only one upward-pointing arrow identified for clarity of illustration) such that said gas may exit with a temperature of approximately 300K. This may cool surrounding gas flowing in the opposing direction through enclosure 540.

In the illustrated embodiment, continuous helical or spiral-like member 528 is thermally coupled (e.g., thermally conductively coupled) to the enclosure 540 such that the described temperature gradient is also established along its cryocondensation surface. This is in contrast to the temperature gradient established over multiple, discrete cryocondensation surfaces as seen in trap 220 of Figure 2. For example, the cryocondensation surface provided by member 528 of trap 520 may be thermalized to approximately 300K - 200K at the approximate region denoted by t₁, approximately 200K - 100K at the approximate region denoted by t₂, approximately 100K - 50K at the approximate region denoted by t₃, approximately 50K - 30K at the approximate region denoted by t₄, approximately 30K - 10K at the approximate region denoted by t₅ and approximately 10K - 5K at the approximate region denoted by t₆.

The associated contaminants previously described herein may therefore cryocondense on appropriate regions, t₁ to t₆, according to the temperatures thereof.

As more molecules of a particular contaminant become trapped, the contaminant may experience a reduction in partial pressure. However, the decreasing temperatures of the temperature gradient established along member 528 may be low enough to overcome the obstacle posed by a reduced partial pressure on cryocondensation. Hence the probability of a contaminant cryocondensing may increase as it travels through the trap. Any contaminant such as N₂ that initially escaped being trapped on the cryocondensation surface of member 528 may therefore be forced to cryocondense on a region of the surface having a lower temperature. Therefore, similar to trap 220 of Figure 2, contaminants may have little or no chance of escaping trap 520.

Furthermore, after a significant level of contaminants have cryocondensed and been trapped on some regions of the cryocondensation surface, contaminants may continue to cryocondense on a neighboring region of the surface which may have a lower volume of trapped contaminants. Therefore, the present systems and methods may be used to filter out contaminants in gas for a longer period of time (for example, on the order of years rather than a few months or even days). Additionally, the smooth temperature gradient of the surface allows for a smoother condensing of contaminants (for example, layer by layer), which prevents a large volume of contaminants from being condensed at one spot or several specific spots, which may eventually plug trap 520.

Member 528 may be closely received by, or even in an interference fit with, an inner surface of enclosure 540. Such an arrangement may force more gas to travel along the helical or spiral-like path afforded by member 528, thereby increasing contact between gas molecules and any available cryocondensation surface. Following the same reasoning, member 528 may be closely received by, or even in an interference fit with an outer surface of transfer tube 560.

Trap 520 may be thermally coupled to pulse tube 250 at one or more temperature stages thereof in order to produce a temperature gradient along member 528. Embodiments comprising trap 520 thermally coupled to pulse tube 250 may not require a transfer tube such as transfer tube 560. However, an advantage of employing a transfer tube may be the establishment of a smoother temperature gradient along the cryocondensation surface provided by member 528.

As previously described, a greater amount of contaminants may be trapped by increasing the total surface area of the cryocondensation surface available in a given volume. Different approaches may be taken to achieve a larger surface area. Figure 2 shows trap 220 employing multiple distinct members and multiple distinct cryocondensation surfaces. Figure 5 shows trap 520 employing a member providing a continuous cryocondensation surface, for example a helical or spiraling cryocondensation surface, with multiple turns, windings or wraps, over a length of the enclosure. An alternative approach may employ a member comprised of a plurality of proximately placed strands or fibers wherein the exposed surfaces thereof provide multiple, continuous cryocondensation surfaces.

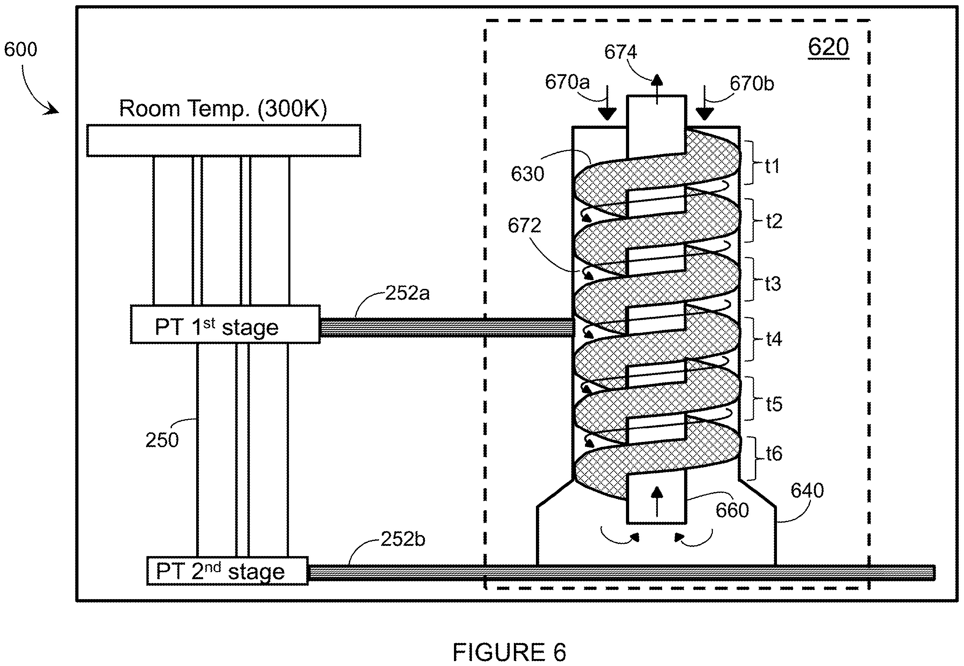

Figure 6 shows a cryogenic trap system 600 with a member formed of proximately placed strands providing multiple, continuous cryocondensation surfaces in accordance with the present systems and methods. Cryogenic trap system 600 includes a cryocondensation trap 620 comprising a member 630 wherein member 630 may be formed of proximately placed strands or fibers. According to another aspect of the invention, a member takes the form of a helical textile, the overall textile having a substantially helical form or shape.

In some implementations, the strands or fibers are not interwoven (i.e., unwoven, nonwoven) with each other. In such implementations, the strands or fibers are entangled, for example being bonded together via mechanical, chemical, heat or solvent treatment. In other implementations, the strands or fibers may be woven or knitted in a regular interwoven form. Some implementations may use a combination of woven and nonwoven forms.

A member with a regular interwoven form may comprise strands or fibers woven together in a repeating and identifiable pattern. Such a pattern may include that which is found in a knitted arrangement of fibers in fabric, structured network of knots, regular intersection of sets of parallel lines similar to that of a mesh or net, double helix, or braid of repeating subcomponents.

A member with nonwoven from may comprise strands or fibers placed, matted or tangled together in a non-repeating pattern. Such a pattern may include that which is found in a tuft of fibers forming a cotton ball, felt, twisted bundle of fibers, or mass of metal fibers similar to that of steel wool. Alternatively, a member may have a combination of woven and nonwoven parts. For example, a first portion of the member may have a woven form and a second portion of the member may have a nonwoven form. A first strand may not necessarily be in contact with a second strand along its entire length. There may be portions of the first strand which do not contact any other strand, thereby forming a gap through which gas within the enclosure may pass, creating a member with a degree of porosity. A single strand may also interweave and/or fold with itself.

Exposed surfaces of the strands of member 630 may serve as multiple, continuous cryocondensation surfaces. In some implementations, the strands of member 630 interweave with each other (e.g., mesh), while in others the strands of member 630 do not interweave with each other. In still other implementations, the strands of member 630 may be arranged in part in regular interwoven form, and in part in an irregular nonwoven form. To avoid clutter, individual strands of member 630 are not called out in Figure 6.

Member 630 of Figure 6 may project into an interior of trap 620 and direct the flow of gas. Furthermore, member 630 has a generally helical or spiral-like shape such that the multiple, continuous cryocondensation surfaces provided have, for example, helical or spiraling surfaces, with multiple turns, windings, or wraps, over a length of an enclosure. The helical or spiral-like member 630 may be characterized by an axial length, pitch, inner radial dimension and outer radial dimension, as discussed above. Member 630 may have a thermal conductivity of a material selected from a group consisting of: stainless steel, copper, silver sinter, brass, bronze and aluminum. Member 630 may be thermally coupled to enclosure 640.

Cryogenic trap system 600 is similar in some respects to cryogenic trap system 500 of Figure 5. Identical or similar structures are indicated by reference numerals that share common digits or the least significant two digits. Only significant differences are discussed in detail below.

Trap 620 of Figure 6 differs from trap 520 of Figure 5 in that member 630 of trap 620 may be comprised of a plurality of strands whose exposed surfaces serve as cryocondensation surfaces. The employment of strands and multiple continuous surfaces may increase the total surface area available for cryocondensation. In some implementations, member 630 may be porous, as described previously. As the porosity of member 630 increases, the impedance or drag on the flow of gas may decrease. However, as the porosity of member 630 increases, total surface area available for cryocondensation may also decrease. Factors such as the total number of strands and cryocondensation surfaces, area of said surfaces, spacing between surfaces and total available volume in enclosure 640 may be varied to achieve an appropriate level of porosity for any particular application.

The mechanism by which a temperature gradient of decreasing temperature may be created along enclosure 640, and therefore member 630, is similar in some respects to that previously described in Figure 5. The direction of flow of gas through enclosure 640 is shown by arrows 670a, 670b. Helical or spiral-like member 630 may generate an approximately helical or spiral-like flow path illustrated by arrow 672 (only one illustrated for clarity) of the gas through enclosure 640. Where member 630 may be porous, gas may flow or pass through any gaps between the strands of member 529. Should a gap become blocked due to accumulation of solidified contaminants, gas may pass through a neighboring gap or follow along the general helical or spiral-like path denoted by arrow 672 within trap 620.

The temperature gradient along member 630 and the strands thereof results in decreasing temperatures along the cryocondensation surfaces provided by the individual strands. For example, the cryocondensation surfaces provided by the strands of member 630 may be thermalized to approximately 300K - 200K at the approximate region denoted by t₁, approximately 200K - 100K at the approximate region denoted by t₂, and so on. Contaminants of different freezing points may cryocondense and be trapped on the appropriate regions of member 529 as similarly described in trap 520 of Figure 5.

Member 630 may be closely received by, or even in an interference fit with, an inner surface of enclosure 640. Although member 630 may be porous in some implementations, an interference fit between the outer curves of spiral-like member 529 with the inner surface of enclosure 640 may prevent gas from flowing in a straight line path through trap 620. Such an arrangement may force more of the gas to travel along the helical or spiral-like path generated by member 630, thereby increasing contact between gas molecules and any available cryocondensation surface. Following the same reasoning, member 630 may be closely received by, or even in an interference fit with, an outer surface of transfer tube 660. In the illustrated embodiment, the diameter of transfer tube 660 is enlarged to implement such an interference fit. In other embodiments, the size of transfer tube 660 may be adjusted accordingly to control an amount of empty space present in the interior of enclosure 640.

An alternative approach to increase the amount of contaminants trapped in a given volume may be to employ a more effective counter-flow cold exchange between gas entering and exiting the trap. A more effective cold exchange between the gases flowing in opposing directions may help to establish a smoother temperature gradient such that specific temperatures are more likely to be reached and maintained at specific regions of a cryocondensation surface. Improved temperature gradient thermalization may also prevent heat from a warmer region of the trap from spreading into a different region of the trap where a lower temperature is desired. For example, contaminants such as N₂, oxygen and argon may cryocondense on a particular region of a cryocondensation trap expected to have a temperature of approximately 40K or lower. Due to inefficient cooling along the trap, said region may have an actual temperature higher than 40K. Therefore, N₂, oxygen and argon may escape being trapped at said region, potentially resulting in a large volume of contaminants being condensed at a later spot or several specific spots which eventually plug the cryocondensation trap.

A more effective cold exchange may be achieved by employing a first helical or spiral-like path along which gas entering the trap may flow through the interior and a complementary second helical or spiral-like path along which gas exiting the trap may flow through the interior. The direction of the gas flowing along the first helical or spiral-like path may be opposite (e.g., clockwise, counterclockwise) that of the gas flowing along the second helical or spiral-like path. The gases flowing in opposing directions may be thermally coupled with each other such that cold exchange may occur. Various implementations which advantageously employ this concept are discussed below.

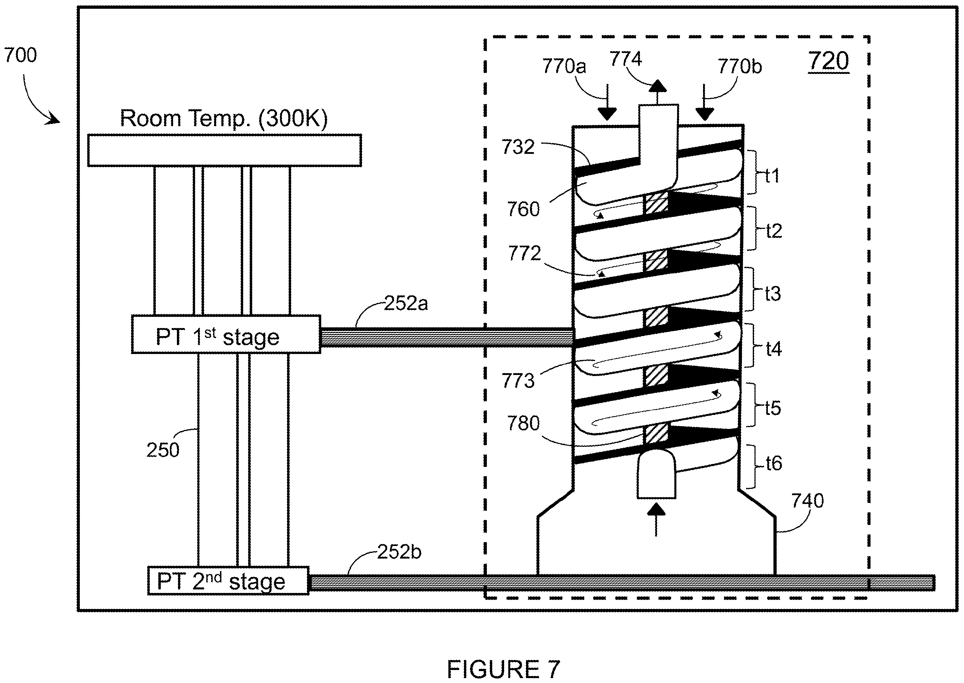

Figure 7 shows a cryogenic trap system 700 with a helical or spiral-like transfer tube 760 in accordance with the present systems and methods. The cryocondensation trap 720 may include one or more members having one or more exposed surface(s) to serve as cryocondensation surface(s). For, example the cryocondensation trap 720 may include a single continuous helical or spiral-like member 732. Similar to member 528 of Figure 5, member 732 of Figure 7 may include at least one exposed surface serving as a continuous cryocondensation surface. Alternatively, trap 720 may not include a member and instead at least one or more exposed surface(s) of the transfer tube 760 may serve as cryocondensation surface(s).

Trap 720 is similar in some respects to trap 520 of Figure 5. Similar structures are indicated by reference numerals that share common digits or the least significant two digits. Only significant differences introduced by trap 720 are discussed in detail below.

Transfer tube 760 of Figure 7 may have a helical or spiral-like form, in contrast to the straight form of transfer tube 560 of Figure 5. A major portion of the transfer tube 760 of Figure 7 may be fixed to member 732 such that the transfer tube 760 is thermally conductively coupled to member 732. In the illustrated embodiment, the transfer tube 760 is fixed along the underside of member 732 throughout enclosure 740.

The helical or spiral-like transfer tube 760 may be characterized by an axial length, pitch (i.e., number of turns per unit length), inner radial dimension and outer radial dimension, similarly to that discussed above in reference to the member 528. However, the transfer tube 760 also has a respective inner tubal dimension (e.g., inner tubal diameter), outer tubal dimension (e.g., outer tubal diameter) and tubal wall thickness (i.e., difference between outer and inner tubal dimensions or tubal diameters).

Gas comprising contaminants may flow into enclosure 740 of trap 720 at approximately 300K, or room temperature. Downward pointing arrows 770a, 770b (collectively 770) represent the direction of gas entering the trap 720. A continuous, helical or spiral-like cryocondensation surface such as that provided by member 732 may generate a first helical or spiral-like flow path, denoted by the downward spiral-like arrow 772 (only one arrow called out for clarity of illustration), along which gas passing through enclosure 740 may flow after entering trap 520. Only two downward spiral-like arrows are illustrated to reduce clutter, however the first helical or spiral-like flow path may extend for the length of enclosure 740. Arrow 772 is not meant to be limiting. Depending on the orientation of trap 720 and the shape of enclosure 740, the first helical or spiral-like flow path may be in a direction other than the downward direction shown by arrow 772. Contaminants of different freezing points may cryocondense and be trapped on suitably thermalized regions of the cryocondensation surface provided by member 732. While shown as a continuous surface, some implementations may employ a discontinuous surface, for example formed of two or more vanes.

Member 732 to be closely received by, or even in an interference fit with, an inner surface of the enclosure 740. Such an arrangement may force more of the gas to travel along the helical or spiral-like flow path 772 generated by member 732, thereby increasing contact between gas molecules and any available cryocondensation surface. Member 732 may also be closely received by, or even in an interference fit with a sealed central column 780 located along an axis about which member 732 is helically disposed, as illustrated in Figure 7. Such a column 780 may prevent gas from traveling in a straight line path through the centerline or major axis of enclosure 740 where there may otherwise be empty space.

The helical or spiral-like transfer tube 760 may generate a second helical or spiral-like flow path, denoted by the upward spiral-like arrow 773 (only one arrow called out for clarity of illustration), along which filtered gas exiting enclosure 740 through transfer tube 769 may flow. To reduce clutter, only two upward spiral-like arrows are illustrated, however the second helical or spiral-like flow path may extend for the length of enclosure 740. Similar to arrow 772, upward spiral-like arrow 773 is not meant to be limiting. Depending on the orientation and shape of trap 740, the second helical or spiral-like flow path may be in a direction other than the upward direction shown by arrow 773. Gas flowing within transfer tube 760 along path 773 may be in thermal contact with the surrounding gas flowing through enclosure 740 along path 772.

Transfer tube 760 may convey filtered gas having an approximate temperature of 4K through enclosure 740 to exit trap 720 in the direction denoted by arrow 774 (only one upward-pointing arrow called out for clarity of illustration) such that the gas may exit with a temperature of approximately 300K. Similar to transfer tube 560 of Figure 5, this may cool surrounding gas flowing through enclosure 740. In contrast to transfer tube 560 of Figure 5, transfer tube 760 of Figure 7 may have a convoluted or tortious path, for example a helical or spiral path. The helical or spiral path may provide a longer path for a given longitudinal length, increasing area over which heat transfer may occur.

A larger volume of cold gas within transfer tube 760 may result in a greater amount of cold transfer from transfer tube 760 to the surrounding gas flowing through enclosure 740 along path 772. Furthermore, the convoluted or tortious path of transfer tube 760 may increase the surface area in contact with, and thermally conductively coupled with, an inner surface of enclosure 740 as illustrated in Figure 7. This may result in more effective cold transfer than might otherwise be achieved via straight tubing, with the greatest amount of cold transfer occurring where the gas within transfer tube 760 is at its lowest temperature. The temperature gradient along trap 720 may be more strongly enforced, contributing to improved temperature gradient thermalization of a cryocondensation surface. For the reasons described, transfer tube 760 may provide effective cooling of a cryocondensation trap such as trap 720.

As previously described, there may be alternative approaches to achieving an effective cold exchange and a smoother temperature gradient. For example, a first spiral-like path may be generated by an inner tube having at least one curved region and a second spiral-like path may be generated by an outer tube also having at least one curved region. The outer tube may surround the inner tube along the length thereof such that there is a space between the outer tube and the inner tube. The first path may be contained within the second path. As a result, a greater number of gas molecules within the paths may thermally interact with each other compared to trap 720 of Figure 7 where the paths are not as closely received. Such an approach may offer a more effective cold transfer between the inner tube and the outer tube.

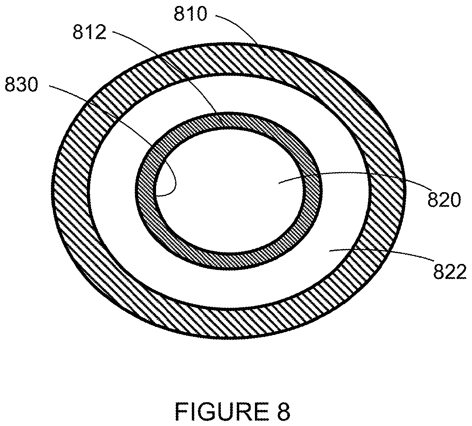

Figure 8 shows an arrangement of an outer tube 810 and inner tube 812 in accordance with the present systems and methods, which arrangement may be employed in a cryogenic trap system.

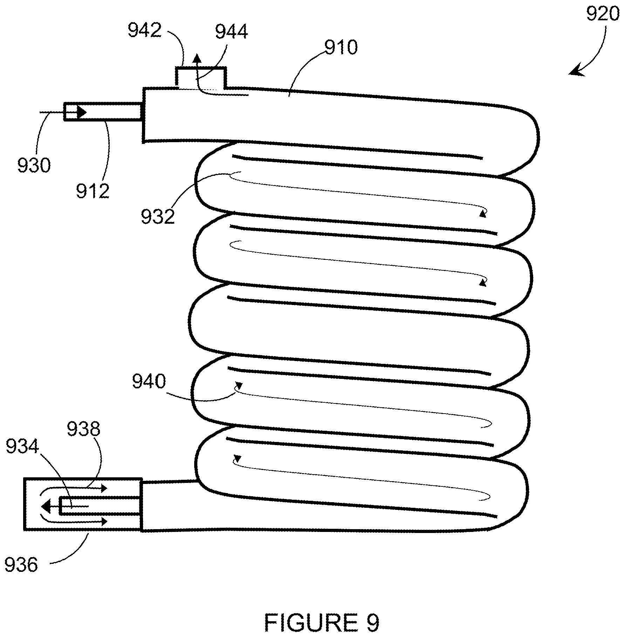

The inner tube 812 has a respective inner tubal dimension (e.g., inner tubal diameter), outer tubal dimension (e.g., outer tubal diameter) and tubal wall thickness (i.e., difference between outer and inner tubal dimensions or diameters). The outer tube 810 likewise has a respective inner tubal dimension (e.g., inner tubal diameter), outer tubal dimension (e.g., outer tubal diameter) and tubal wall thickness (i.e., difference between outer and inner tubal dimensions or diameters). Typically the inner and/or outer tubal dimensions (e.g., tubal diameters) and tubal wall thickness will be uniform along the length of the respective one of the outer or inner tube 810, 812, although such is not required. Outer tube 810 is shown with a larger tubal wall thickness than the tubal wall thickness of the inner tube 812 to illustrate that the respective tubal wall thicknesses of the outer tube 810 and inner tube 812 may differ from one another. Such is not however required. While illustrated as having circular cross sectional profiles, either or both of the outer and inner tube 810, 812 may have other cross sectional profiles, for example square, rectangular, hexagonal, octagonal or oval. The outer tube 810 and inner tube 812 may each be helical or spiral-like lengths of tubing, for example as illustrated in Figure 9. Alternatively, the outer tube 810 and inner tube 812 may be straight lengths of tubing.

The inner tube 812 is received in the inner tubal diameter of the outer tube 810. For example, the inner tube 812 may be concentrically received in or by the outer tube 810. In some implementations, the inner tube 812 may physically contact the outer tube 810 at one or more points or locations, for example to maintain a space between the outer tubal dimension (e.g., tubal diameter) of the inner tube 812 and the inner tubal dimension (e.g., tubal diameter) of the outer tube 810. The inner tubal dimension of the tube 812 may form or define a first space, passage, or volume which constitutes a first flow path 820 through which gas may flow. A gap, space, passage, or volume between the inner tubal dimension of the outer tube 810 and the outer tubal dimension of the inner tube 812 forms or defines a second flow path 822 through which gas may flow. For example, a second helical or spiral tube may have an interior volume into which a first helical or spiral tube is received (e.g., concentrically), the first helical or spiral tube having a respective interior volume. A first flow path 820 is defined by or formed by an inner tubal dimension (e.g., tubal diameter) of the first helical or spiral tube. A second flow path 822 is defined by or formed between an inner tubal dimension (e.g., tubal diameter of the second helical or spiral tube and an outer tubal dimension (e.g., tubal diameter) of the first helical or spiral tube.

The inner tubal dimension or inner surface of the inner tube 812 may, for example, serve as a cryocondensation surface 830. Gas flowing along the first flow path 820 through inner tube 812 may be thermally conductively coupled to gas flowing along the second flow path 822 through the passage between the inner tube 812 and the outer tubing 810. The flow of gas along the first flow path 820 and flow of gas along the second flow path 822 may be in opposing directions to each other.

In practice, it may be difficult to maintain a uniform spacing between the inner tube 812 and the outer tube 810. Thus, the exact dimensions of the second flow path 822 may vary along a length of the trap. However, the dimensions of first flow path 820 may be more easily controlled. Consequently, the surface area of cryocondensation surface 830 may also be more easily controlled, independent of any changes in the dimensions of the second flow path 822. For this reason, unfiltered gas (i.e., gas comprising contaminants) may enter and flow through the first flow path 820 in the inner tube 812 instead of the second flow path 822 between the inner and outer tube 812, 810, respectively. However, such an arrangement is not critical to operation. Other implementations may employ an opposite arrangement, where unfiltered gas may flow through the second flow path 822 between the inner and the outer tube 812, 810, respectively, and filtered gas may flow through the first flow path 820 in the inner tube 812. Such embodiments may be implemented by modifying trap 720 of Figure 7 such that enclosure 740 provides a cryocondensation surface and surrounds the helical or spiral-like transfer tube 760.

Figure 9 shows a cryocondensation trap 920 with outer tube 910 and an inner tube 912, in accordance with the present invention. In other implementations, the outer tube 910 may be implemented by a helical enclosure. The outer tube 910 and inner tube 912 may be similar or even identical to that illustrated in Figure 8. To avoid duplication with prior descriptions of cryocondensation traps, previously illustrated structures such as a pulse tube and connectors are omitted from Figure 9, however trap 920 may operate as a component of a cryogenic trap system similar to the cryogenic trap systems previously described in Figures 2 and 5 - 7.

Gas comprising contaminants may flow into trap 920 along the first flow path 820 (Figure 8) through the inner tube 912 at approximately 300K, or room temperature. The arrow 930 represents the direction of gas entering inner tube 912. The inner tube 912 may form or define a first spiral-like flow path 820 (Figure 8) and denoted in Figure 9 by the downward spiral-like arrow 932 (only one arrow called out for clarity of illustration) along which gas may flow. To reduce clutter, only two downward spiral-like arrows are illustrated, however the first spiral-like flow path 932 may extend for the length of trap 920. The direction indicated by the arrow 932 is not meant to be limiting. Depending on the orientation and shape of trap 920, the first spiral-like flow path may be in a direction other than the downward direction indicated by arrow 920. An inner wall or surface of the inner tube 912 may serve as a single, helical or spiral-like cryocondensation surface.

Trap 920 is similar in some respects to the cryocondensation traps of Figures 2 and 5 - 7 as previously discussed. In particular, the mechanism by which a temperature gradient of decreasing temperatures may be initially created along outer tube 910 is much the same as previously described in Figure 5. For example, at least one region of outer tube 910 may be thermally coupled (e.g., thermally conductively coupled) to a pulse tube providing one or more temperatures stages, thereby establishing a range of temperatures along outer tube 910. A majority of a length of the inner tube 912 may be contained inside the outer tube 910, hence the inner tube 912 may also be thermalized to the range of decreasing temperatures through thermal conduction. Consequently, the temperature gradient may also be established along the cryocondensation surface provided by inner tube 912.

Upon entering inner tube 912, gas may flow along first flow path 932 and experience a gradual decrease in temperature due to the previously described temperature gradient established along inner tube 912. As a result, contaminants in the gas may cryocondense and thus be trapped on appropriate regions of the cryocondensation surface provided by inner tube 912.

A factor contributing to the run time of trap 920 may be an inner tubal dimension (e.g., tubal diameter) of the inner tube 912. A relatively larger inner tubal dimension (e.g., tubal diameter) decreases the likelihood that the inner tube 912 will become blocked due to accumulation of solidified contaminants. Therefore, the inner tubal dimension (e.g., tubal diameter) of the inner tube 912 may be appropriately sized to achieve a run time suitable for a specific application.

Filtered gas may exit the inner tube 912 in the direction denoted by the arrow 934. At this point, the filtered gas may have a temperature lower than any earlier portion of trap 920, for example 4K. In Figure 9, a portion of outer tube 910 is cut away in a tubing region 936 in order to show the direction of gas flow after gas exits inner tube 912. Tubing region 936 of outer tube 910 may be sealed at the end, such that filtered gas that exits the inner tube 912 may then enter the outer tube 910 in the direction denoted by arrow 938 (only one arrow called out for clarity of illustration).

Similar to the inner tube 912, the outer tube 910 may generate a second helical or spiral-like flow path 822 (Figure 8), denoted in Figure 9 by the upward spiral-like arrow 940 (only one arrow called out for clarity of illustration) along which gas may flow. To reduce clutter, only two upward spiral-like arrows are illustrated, however the second helical or spiral-like flow path may extend for the length of trap 920. Similar to arrow 932, the direction indicated by arrow 940 is not meant to be limiting.

The filtered gas may flow along the second flow path 940 between the inner tube 912 and the outer tube 910. The filtered gas may experience a gradual increase in temperature along path 940 such that it exits trap 920 with a temperature of approximately 300K in the direction denoted by arrow 944. This transfer of cold from inner tube 912 to outer tube 910 reinforces the temperature gradient along trap 920. Furthermore, outer tube 910 may surround a large portion of inner tube 912 such that a majority length of the first helical or spiral-like flow path 932 is contained within the second helical or spiral-like flow path 940. As a result, a greater number of gas molecules within path 940 may thermally interact with the gas molecules of path 910 compared to trap 720 of Figure 7 where the flow paths are not as closely received. Thus, trap 920 takes greater advantage of the temperature potential between the gases traveling in opposing directions, resulting in more efficient cold transfer.

Once a significant amount of impurities have been trapped in a cryocondensation trap such as any of the cryocondensation traps described in Figures 2, 5 - 7 and 9 (i.e., after years of running the cryocondensation trap), the trap may be regenerated by separating the pulse tube from the trap and applying heat to the trap, thus venting out trapped contaminants. Alternatively, the trap may be regenerated by applying heat to the cryocondensation trap without affecting the pulse tube. Heat may be applied to the cryocondensation trap via a heater, for example, an optical heat source, which may include the use of infrared radiation. Other implementations may apply heat by serially connecting a resistor or multiple resistors.

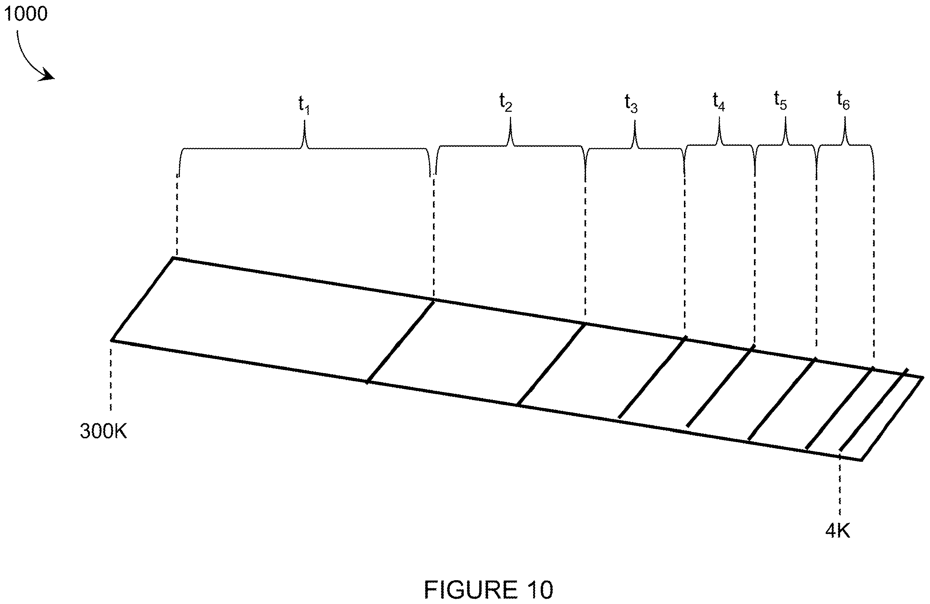

Figure 10 shows a cryocondensation surface 1000, such as that of member 528 of Figure 5, laid out flat, in accordance with the present systems and methods. The region t₁ represents a temperature range of cryocondensation surface 1000 that is approximately 300K - 200K, t₂ represents a temperature range of cryocondensation surface 1000 that is approximately 200K - 100K, t₃ represents a temperature range of cryocondensation surface 1000 that is approximately 100K- 50K, t₄ represents a temperature range of cryocondensation surface 1000 that is approximately 50K - 30K, t₅ represents a temperature range of cryocondensation surface 1000 that is approximately 30K - 10K, and t₆ represents a temperature range of cryocondensation surface 1000 that is approximately 10K - 5K. By implementing at least one continuous cryocondensation surface, the surface area of a cryocondensation trap such as trap 320 of Figure 3 may be increased to increase the trapping volume of contaminants. Figure 10 may also similarly describe the temperature range present along a continuous cryocondensation surface present in the traps of Figures 6, 7 and 9.

Furthermore, the temperature gradient of a continuous cryocondensation surface spanned by the cryocondensation surface may allow multiple types of impurities to be trapped on certain regions of the cryocondensation surface. As previously described, the continuity of a cryocondensation surface, such as that provided by member 528 of Figure 5, may allow contaminants that escaped cryocondensation at an appropriate region along the cryocondensation surface to be trapped at a later region. Specifically, escaped contaminants may flow over already trapped contaminants and cryocondense on a region of the cryocondensation surface with a lower volume of trapped contaminants. Such a process maximizes the trapping volume of contaminants and increases the lifetime of the trap.

When contaminants flow through a cryocondensation trap such as the cryocondensation traps described in Figures 2, 5 - 7 and 9, they may cryocondense on a cryocondensation surface such as cryocondensation surface 1000. Contaminants may condense on cryocondensation surface 1000 layer by layer until the available surface is occupied. Currently available commercial dilution refrigeration systems using cryoadsorption traps known in the art typically block before 1 Ln of air is added into the system. In contrast, a full system test showed that a cryocondensation trap similar to the trap illustrated in Figure 6 showed no significant signs of blockage when 10 Ln of air was introduced into the system. In the test, the cryocondensation trap was installed into and in operation with a commercially available dry dilution refrigerator. The test results indicate that a cryocondensation trap may trap at least 10 times more contaminants than a cryoadsorption trap. These results suggest a cryocondensation trap may prolong the time to blockage of a system comprising a helium circuit or a dilution refrigerator by at least one order of magnitude.

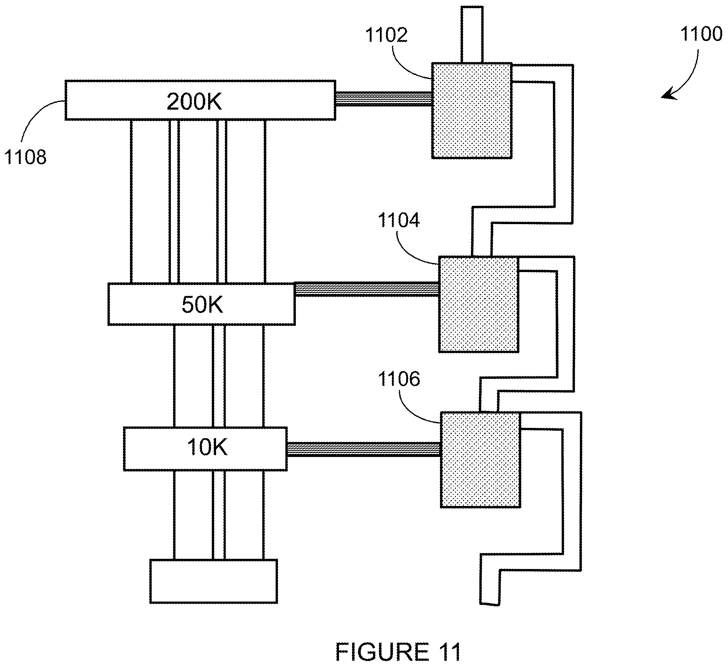

Figure 11 is a schematic diagram of cryogenic trap system 1100 with multiple cryocondensation traps 1102, 1104, 1106. Each cryocondensation trap 1102, 1104 and 1106 may be thermally coupled to a different temperature level of a pulse tube 1108. For example, trap 1102 is thermally coupled to an approximately 200K level of pulse tube 1108, trap 1104 is thermally coupled to an approximately 50K level of pulse tube 1108 and trap 1106 is thermally coupled to an approximately 10K level of pulse tube 1108. The multiple traps 1102, 1104, 1106 may cryocondense and therefore trap different types of contaminants depending on the temperature of each of traps 1102, 1104, 1106.

The above description of illustrated embodiments, including what is described in the Abstract, is not intended to be exhaustive or to limit the embodiments to the precise forms disclosed. Although specific embodiments of and examples are described herein for illustrative purposes, various equivalent modifications can be made without departing from the spirit and scope of the disclosure, as will be recognized by those skilled in the relevant art. The teachings provided herein of the various embodiments can be applied to other methods of quantum computation, not necessarily the exemplary methods for quantum computation generally described above.

For example, the teachings provided herein of the various embodiments can also be applied to general helium purification systems.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled.

## Claims

1. A cryogenic trap system (500; 600) for a system comprising a helium circuit, the cryogenic trap system comprising:
an enclosure (540; 640) having a first end, a second end opposed to the first end, and an interior surface that forms an interior of the enclosure;
an inlet (570; 670) for a gas in the helium circuit to enter the interior of the enclosure;
an outlet (574; 674) for the gas to exit the interior of the enclosure; and
at least one helical cryocondensation surface in the interior of the enclosure,
wherein the at least one helical cryocondensation surface:
extends axially from at least proximate the first end of the enclosure at least toward the second end of the enclosure, and
is thermally conductively coupled to a cold source (250),
wherein respective ones of a plurality of portions of the at least one helical cryocondensation surface are conductively thermally coupled to a plurality of respective portions of the at least one cold source (250) at a plurality of different temperatures, and the at least one helical cryocondensation surface exhibits a temperature gradient as the interior of the enclosure is traversed from the first to the second end,
wherein the at least one cryocondensation surface extends radially in the interior of the enclosure and comprises at least one helical cryocondensation surface on an exterior surface of a helical member (528; 630) that axially extends along a majority of the enclosure, **characterized in that**
the helical member (528) is in a form of a helical plate having a pair of opposed exterior surfaces wherein the at least one helical cryocondensation surface comprises at least one of the opposed exterior surfaces, or,
the helical member (630) comprises a helical textile and the at least one helical cryocondensation surface comprises a respective exterior surface of a plurality of strands of the helical textile.

2. The cryogenic trap system of claim 1 wherein the outlet is located at least proximate the first end of the enclosure, and further comprising:
a transfer tube (560; 660) having an interior passage that provides a return flow path from at least proximate the second end of the enclosure to the first end of the enclosure, and which fluidly couples to the outlet.

3. The cryogenic trap system of claim 2 wherein, in case the helical member is in a form of a helical plate, the transfer tube is helical.

4. The cryogenic trap system of claim 3 wherein the transfer tube is thermally conductively coupled to the helical plate along a length of the transfer tube wherein the transfer tube in particular is at least closely received by the helical member and the helical member is at least closely received by enclosure.

5. The cryogenic trap system of claim 1 or 2, wherein, in case the helical member comprises a helical textile, the helical textile is at least one of a woven textile, a nonwoven textile or any combination thereof.

6. The cryogenic trap system of claim 5 wherein the transfer tube is thermally conductively coupled to the helical textile along a length of the transfer tube, or wherein the transfer tube is at least closely received by the helical textile and the helical textile is at least closely received by the interior of enclosure.

7. The cryogenic trap system of claim 3 where at least one of the cryocondensation surface comprises an exterior surface of the transfer tube, and in particular further comprising:
a sealed column (780) at least closely received by the transfer tube wherein the sealed column extends for at least a length of the transfer tube and wherein the transfer tube is at least closely received by the interior of enclosure.

8. A cryogenic trap system (920) for a system comprising a helium circuit, the cryogenic trap system comprising:
an enclosure (910) having a first end, a second end opposed to the first end, and an interior surface that forms an interior of the enclosure;
an inlet (930) for a gas in the helium circuit to enter the interior of the enclosure;
an outlet (944) for the gas to exit the interior of the enclosure; and
at least one helical cryocondensation surface in the interior of the enclosure,
wherein the at least one helical cryocondensation surface:
extends axially from at least proximate the first end of the enclosure at least toward the second end of the enclosure, and
is thermally conductively coupled to a cold source,
wherein respective ones of a plurality of portions of the at least one helical cryocondensation surface are conductively thermally coupled to a plurality of respective portions of the at least one cold source at a plurality of different temperatures, and the at least one helical cryocondensation surface exhibits a temperature gradient as the interior of the enclosure is traversed from the first to the second end,
**characterized in that** the cryogenic trap system further comprises:
an inner tube (912) having an interior passage wherein a majority of the inner tube is received by the interior of the enclosure,
wherein the enclosure (910) is helical; the at least one cryocondensation surface comprises a surface of the inner tube; and the interior passage of the inner tube provides a first flow path and a gap between the inner tube and the interior surface of the enclosure provides a second flow path.

9. The cryogenic trap system of claim 8 wherein a flow along the first flow path runs in an opposite direction from a flow along the second flow path, or wherein the surface of the inner tube is an interior surface of the interior passage of the inner tube and the inlet is provided by a first end of the inner tube, or wherein the surface of the inner tube is an exterior surface of the inner tube and the inlet is provided by the first end of the enclosure.

10. The cryogenic trap system of claim 1 wherein the cryocondensation surface has a thermal conductivity of a material selected from a group consisting of: stainless steel, copper, silver sinter, brass, bronze and aluminum, or wherein the cryocondensation surface is formed of an orthotropic material, or wherein the enclosure is thermally coupled to the cold source and has a thermal conductivity of a material selected from a group consisting of: stainless steel, copper, silver sinter, brass, bronze and aluminum, or wherein the cold source includes a pulse tube cryocooler, or wherein the cold source includes a bath of liquid cryogen.

## Patentansprüche

1. Kryogenes Auffangsystem (500; 600) für ein System, das einen Heliumkreislauf umfasst, wobei das kryogene Auffangsystem umfasst:
ein Gehäuse (540; 640) mit einem ersten Ende, einem dem ersten Ende entgegengesetzten zweiten Ende und einer Innenfläche, die einen Innenraum des Gehäuses bildet;
einen Einlass (570; 670) für ein Gas in dem Heliumkreislauf, um in das Innere des Gehäuses einzutreten;
einen Auslass (574; 674) für das Gas, um aus dem Inneren des Gehäuses auszutreten; und
mindestens eine helixförmige Kryokondensationsoberfläche im Inneren des Gehäuses,
wobei die mindestens eine helixförmige Kryokondensationsoberfläche:
sich axial von zumindest in der Nähe des ersten Endes des Gehäuses zumindest in Richtung des zweiten Endes des Gehäuses erstreckt, und
thermisch leitend mit einer Kältequelle (250) gekoppelt ist,
wobei jeweilige einer Mehrzahl von Abschnitten der mindestens einen helixförmigen Kryokondensationsoberfläche bei einer Mehrzahl von unterschiedlichen Temperaturen mit einer Mehrzahl von jeweiligen Abschnitten der mindestens einen Kältequelle (250) thermisch leitend gekoppelt sind und die mindestens eine helixförmige Kryokondensationsoberfläche einen Temperaturgradienten aufweist, wenn das Innere des Gehäuses von dem ersten zu dem zweiten Ende traversiert wird,
wobei sich die mindestens eine Kryokondensationsoberfläche radial in das Innere des Gehäuses erstreckt und mindestens eine helixförmige Kryokondensationsoberfläche auf einer Außenfläche eines helixförmigen Elements (528; 630) umfasst, das sich axial entlang eines Großteils des Gehäuses erstreckt, **dadurch gekennzeichnet, dass**
das helixförmige Element (528) in Form einer helixförmigen Platte mit einem Paar entgegengesetzter Außenflächen vorliegt, wobei die mindestens eine helixförmige Kryokondensationsfläche mindestens eine der entgegengesetzten Außenflächen umfasst, oder,
das helixförmige Element (630) ein helixförmiges Textil umfasst und die mindestens eine helixförmige Kryokondensationsoberfläche eine entsprechende Außenfläche einer Mehrzahl von Strängen des helixförmigen Textils umfasst.

2. Kryogenes Auffangsystem nach Anspruch 1, bei dem sich der Auslass zumindest in der Nähe des ersten Endes des Gehäuses befindet, und das ferner umfasst:
ein Übertragungsrohr (560; 660) mit einem inneren Durchgang, der einen Rückflussweg von zumindest in der Nähe des zweiten Endes des Gehäuses zu dem ersten Ende des Gehäuses bildet und der fluidleitend mit dem Auslass verbunden ist.

3. Kryogenes Auffangsystem nach Anspruch 2, wobei, falls das helixförmige Element in Form einer helixförmigen Platte vorliegt, das Übertragungsrohr helixförmig ist.

4. Kryogenes Auffangsystem nach Anspruch 3, wobei das Übertragungsrohr entlang einer Länge des Übertragungsrohrs thermisch leitend mit der helixförmigen Platte gekoppelt ist, wobei das Übertragungsrohr insbesondere zumindest eng von dem helixförmigen Element aufgenommen ist und das helixförmige Element zumindest eng von dem Gehäuse aufgenommen ist.

5. Kryogenes Auffangsystem nach Anspruch 1 oder 2, wobei, falls das helixförmige Element ein helixförmiges Textil umfasst, das helixförmige Textil ein gewebtes Textil, ein nicht gewebtes Textil und/oder eine Kombination davon ist.

6. Kryogenes Auffangsystem nach Anspruch 5, wobei das Übertragungsrohr entlang einer Länge des Übertragungsrohrs thermisch leitend mit dem helixförmigen Textil verbunden ist, oder wobei das Übertragungsrohr zumindest eng von dem helixförmigen Textil aufgenommen ist und das helixförmige Textil zumindest eng von dem Inneren des Gehäuses aufgenommen ist.

7. Kryogenes Auffangsystem nach Anspruch 3, bei dem zumindestens eine Kryokondensationsoberfläche eine Außenfläche des Übertragungsrohrs umfasst, und das insbesondere ferner umfasst:
eine abgedichtete Säule (780), die zumindest eng von dem Transferrohr aufgenommen ist, wobei sich die abgedichtete Säule über zumindestens eine Länge des Transferrohrs erstreckt und wobei das Transferrohr zumindest eng von dem Inneren des Gehäuses aufgenommen ist.

8. Kryogenes Auffangsystem (920) für ein System, das einen Heliumkreislauf umfasst, wobei das kryogene Auffangsystem umfasst:
ein Gehäuse (910) mit einem ersten Ende, einem dem ersten Ende entgegengesetzten zweiten Ende und einer Innenfläche, die einen Innenraum des Gehäuses bildet;
einen Einlass (930) für ein Gas in dem Heliumkreislauf, um in das Innere des Gehäuses einzutreten;
einen Auslass (944) für das Gas, um aus dem Inneren des Gehäuses auszutreten; und
mindestens eine helixförmige Kryokondensationsoberfläche im Inneren des Gehäuses,
wobei die mindestens eine helixförmige Kryokondensationsoberfläche:
sich axial von zumindest in der Nähe des ersten Endes des Gehäuses zumindest in Richtung des zweiten Endes des Gehäuses erstreckt, und
thermisch leitend mit einer Kältequelle gekoppelt ist,
wobei jeweilige einer Mehrzahl von Abschnitten der mindestens einen helixförmigen Kryokondensationsoberfläche bei einer Mehrzahl von unterschiedlichen Temperaturen mit einer Mehrzahl von jeweiligen Abschnitten der mindestens einen Kältequelle thermisch leitend gekoppelt sind und die mindestens eine helixförmige Kryokondensationsoberfläche einen Temperaturgradienten aufweist, wenn das Innere des Gehäuses von dem ersten zu dem zweiten Ende traversiert wird,
**dadurch gekennzeichnet, dass** das kryogene Auffangsystem ferner umfasst:
ein Innenrohr (912) mit einem inneren Durchgang, wobei ein Großteil des Innenrohrs vom Inneren des Gehäuses aufgenommen wird,
wobei das Gehäuse (910) helixförmig ist; die mindestens eine Kryokondensationsoberfläche eine Oberfläche des Innenrohrs umfasst; und der innere Durchgang des Innenrohrs einen ersten Strömungsweg bereitstellt und ein Spalt zwischen dem Innenrohr und der Innenfläche des Gehäuses einen zweiten Strömungsweg bereitstellt.

9. Kryogenes Auffangsystem nach Anspruch 8, wobei eine Strömung entlang des ersten Strömungsweges in entgegengesetzter Richtung zu einer Strömung entlang des zweiten Strömungsweges verläuft, oder wobei die Oberfläche des Innenrohrs eine Innenfläche des inneren Durchlasses des Innenrohres ist und der Einlaß durch ein erstes Ende des Innenrohres bereitgestellt ist, oder wobei die Oberfläche des Innenrohrs eine Außenfläche des Innenrohrs ist und der Einlaß durch das erste Ende des Gehäuses bereitgestellt ist.

10. Kryogenes Auffangsystem nach Anspruch 1, wobei die Kryokondensationsoberfläche eine thermische Leitfähigkeit eines Materials aufweist, das aus einer Gruppe ausgewählt ist, die besteht aus: rostfreiem Stahl, Kupfer, Silbersinter, Messing, Bronze und Aluminium, oder wobei die Kryokondensationsoberfläche aus einem orthotropen Material gebildet ist, oder wobei das Gehäuse thermisch mit der Kältequelle gekoppelt ist und eine thermische Leitfähigkeit eines Materials aufweist, das aus einer Gruppe ausgewählt ist, die besteht aus: rostfreiem Stahl, Kupfer, Silbersinter, Messing, Bronze und Aluminium, oder wobei die Kältequelle einen Pulsrohr-Kryokühler umfasst, oder wobei die Kältequelle ein Bad aus flüssigem Kryogen enthält.

## Revendications

1. Système de piège cryogénique (500 ; 600) pour un système comprenant un circuit d'hélium, le système de piège cryogénique comprenant :
une enceinte (540 ; 640) ayant une première extrémité, une seconde extrémité opposée à la première extrémité et une surface intérieure qui forme un intérieur de l'enceinte ;
une entrée (570 ; 670) pour qu'un gaz dans le circuit d'hélium pénètre à l'intérieur de l'enceinte ;
une sortie (574 ; 674) pour que le gaz sorte de l'intérieur de l'enceinte ; et
au moins une surface de cryocondensation hélicoïdale à l'intérieur de l'enceinte,
dans lequel l'au moins une surface de cryocondensation hélicoïdale :
s'étend axialement depuis au moins la proximité de la première extrémité de l'enceinte au moins vers la seconde extrémité de l'enceinte, et
est couplée de manière thermoconductrice à une source froide (250),
dans lequel les parties respectives d'une pluralité de parties de l'au moins une surface de cryocondensation hélicoïdale sont couplées de manière thermoconductrice à une pluralité de parties respectives de l'au moins une source froide (250) à une pluralité de températures différentes, et l'au moins une surface de cryocondensation hélicoïdale présente un gradient de température lorsque l'intérieur de l'enceinte est traversé de la première à la seconde extrémité,
dans lequel l'au moins une surface de cryocondensation s'étend radialement à l'intérieur de l'enceinte et comprend au moins une surface de cryocondensation hélicoïdale sur une surface extérieure d'un élément hélicoïdal (528 ; 630) qui s'étend axialement le long d'une majorité de l'enceinte, **caractérisée en ce que**
l'élément hélicoïdal (528) se présente sous la forme d'une plaque hélicoïdale ayant une paire de surfaces extérieures opposées dans lequel l'au moins une surface de cryocondensation hélicoïdale comprend au moins l'une des surfaces extérieures opposées, ou,
l'élément hélicoïdal (630) comprend un textile hélicoïdal et l'au moins une surface de cryocondensation hélicoïdale comprend une surface extérieure respective d'une pluralité de brins du textile hélicoïdal.

2. Système de piège cryogénique selon la revendication 1, dans lequel la sortie est située au moins à proximité de la première extrémité de l'enceinte, et comprenant en outre :
un tube de transfert (560 ; 660) ayant un passage intérieur qui fournit un chemin d'écoulement de retour depuis au moins la proximité de la seconde extrémité de l'enceinte jusqu'à la première extrémité de l'enceinte, et qui se couple fluidiquement à la sortie.

3. Système de piège cryogénique selon la revendication 2, dans lequel, dans le cas où l'élément hélicoïdal est sous la forme d'une plaque hélicoïdale, le tube de transfert est hélicoïdal.

4. Système de piège cryogénique selon la revendication 3, dans lequel le tube de transfert est couplé de manière thermoconductrice à la plaque hélicoïdale le long d'une longueur du tube de transfert, dans lequel le tube de transfert en particulier est au moins étroitement reçu par l'élément hélicoïdal et l'élément hélicoïdal est au moins étroitement reçu par l'enceinte.

5. Système de piège cryogénique selon la revendication 1 ou 2, dans lequel, dans le cas où l'élément hélicoïdal comprend un textile hélicoïdal, le textile hélicoïdal est au moins un textile parmi un textile tissé, un textile non tissé ou toute combinaison de ceux-ci.

6. Système de piège cryogénique selon la revendication 5, dans lequel le tube de transfert est couplé de manière thermoconductrice au textile hélicoïdal le long d'une longueur du tube de transfert, ou dans lequel le tube de transfert est au moins étroitement reçu par le textile hélicoïdal et le textile hélicoïdal est au moins étroitement reçu par l'intérieur de l'enceinte.

7. Système de piège cryogénique selon la revendication 3, dans lequel au moins l'une des surfaces de cryocondensation comprend une surface extérieure du tube de transfert, et en particulier comprenant en outre :
une colonne scellée (780) au moins étroitement reçue par le tube de transfert dans lequel la colonne scellée s'étend sur au moins une longueur du tube de transfert et dans lequel le tube de transfert est au moins étroitement reçu par l'intérieur de l'enceinte.

8. Système de piège cryogénique (920) pour un système comprenant un circuit d'hélium, le système de piège cryogénique comprenant :
une enceinte (910) ayant une première extrémité, une seconde extrémité opposée à la première extrémité, et une surface intérieure qui forme un intérieur de l'enceinte ;
une entrée (930) pour qu'un gaz dans le circuit d'hélium pénètre à l'intérieur de l'enceinte ;
une sortie (944) pour que le gaz sorte de l'intérieur de l'enceinte ; et
au moins une surface de cryocondensation hélicoïdale à l'intérieur de l'enceinte,
dans lequel l'au moins une surface de cryocondensation hélicoïdale :
s'étend axialement depuis au moins la proximité de la première extrémité de l'enceinte au moins vers la seconde extrémité de l'enceinte, et
est couplée de manière thermoconductrice à une source froide,
dans lequel les parties respectives d'une pluralité de parties de l'au moins une surface de cryocondensation hélicoïdale sont couplées de manière thermoconductrice à une pluralité de parties respectives de l'au moins une source froide à une pluralité de températures différentes, et l'au moins une surface de cryocondensation hélicoïdale présente un gradient de température lorsque l'intérieur de l'enceinte est traversé de la première à la seconde extrémité,
**caractérisé en ce que** le système de piège cryogénique comprend en outre :
un tube intérieur (912) ayant un passage intérieur dans lequel une majorité du tube intérieur est reçue par l'intérieur de l'enceinte,
dans lequel l'enceinte (910) est hélicoïdale ; l'au moins une surface de cryocondensation comprend une surface du tube intérieur ; et le passage intérieur du tube intérieur fournit un premier chemin d'écoulement et un espace entre le tube intérieur et la surface intérieure de l'enceinte fournit un deuxième chemin d'écoulement.

9. Système de piège cryogénique selon la revendication 8, dans lequel un écoulement le long du premier chemin d'écoulement va dans une direction opposée à un écoulement le long du deuxième chemin d'écoulement, ou dans lequel la surface du tube intérieur est une surface intérieure du passage intérieur du tube intérieur et l'entrée est fournie par une première extrémité du tube intérieur, ou dans lequel la surface du tube intérieur est une surface extérieure du tube intérieur et l'entrée est fournie par la première extrémité de l'enceinte.

10. Système de piège cryogénique selon la revendication 1, dans lequel la surface de cryocondensation a une conductivité thermique d'un matériau choisi dans un groupe constitué par : l'acier inoxydable, le cuivre, un produit fritté d'argent, le laiton, le bronze et l'aluminium, ou dans lequel la surface de cryocondensation est formée d'un matériau orthotrope, ou dans lequel l'enceinte est couplée thermiquement à la source froide et a une thermoconductivité d'un matériau choisi dans un groupe constitué par : l'acier inoxydable, le cuivre, un produit fritté d'argent, le laiton, le bronze et l'aluminium, ou dans lequel la source froide comprend un refroidisseur cryogénique à tube émetteur d'impulsions, ou dans lequel la source froide comprend un bain de cryogène liquide.
